(19) Europäisches Patentamt
European Patent Office
Office européen des brevets

(11) EP 3 582 955 B1

(12) **EUROPÄISCHE PATENTSCHRIFT**

(45) Veröffentlichungstag und Bekanntmachung des Hinweises auf die Patenterteilung:
**23.12.2020 Patentblatt 2020/52**

(21) Anmeldenummer: **18703795.7**

(22) Anmeldetag: **13.02.2018**

(51) Int Cl.:
***B29C 67/00*** $^{(2017.01)}$ ***C08K 5/103*** $^{(2006.01)}$
***C08L 69/00*** $^{(2006.01)}$ ***B33Y 80/00*** $^{(2015.01)}$
***B33Y 70/00*** $^{(2020.01)}$ ***B33Y 10/00*** $^{(2015.01)}$

(86) Internationale Anmeldenummer:
**PCT/EP2018/053575**

(87) Internationale Veröffentlichungsnummer:
**WO 2018/149831 (23.08.2018 Gazette 2018/34)**

(54) **VERFAHREN ZUR HERSTELLUNG EINES GEGENSTANDS MITTELS EINES ADDITIVEN FERTIGUNGSVERFAHRENS UNTER EINSATZ EINES POLYCARBONAT-AUFBAUMATERIALS MIT VERBESSERTER FLIESSFÄHIGKEIT**

METHOD FOR MANUFACTURING AN OBJECT BY MEANS OF AN ADDITIVE PRODUCTION PROCESS USING A POLYCARBONATE CONSTRUCTION MATERIAL WITH IMPROVED FLOWABILITY

PROCÉDÉ DE FABRICATION D’UN OBJET SELON LE PROCÉDÉ DE FABRICATION ADDITIVE À L’AIDE D’UN MATÉRIAU DE CONSTRUCTION EN POLYCARBONATE AYANT UNE CAPACITÉ D’ÉCOULEMENT AMÉLIORÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.02.2017 EP 17155988**

(43) Veröffentlichungstag der Anmeldung:
**25.12.2019 Patentblatt 2019/52**

(73) Patentinhaber: **Covestro Deutschland AG**
**51373 Leverkusen (DE)**

(72) Erfinder:
- **ACHTEN, Dirk**
  **51375 Leverkusen (DE)**
- **BÜSGEN, Thomas**
  **51377 Leverkusen (DE)**
- **WEHRMANN, Rolf**
  **47800 Krefeld (DE)**
- **HEUER, Helmut, Werner**
  **57074 Siegen (DE)**

(74) Vertreter: **Levpat**
**c/o Covestro AG**
**Gebäude 4825**
**51365 Leverkusen (DE)**

(56) Entgegenhaltungen:
**WO-A1-2015/077053 WO-A1-2016/087296**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 582 955 B1

## Beschreibung

Die vorliegende Erfindung betrifft ein Verfahren zur Herstellung eines Gegenstands mittels eines additiven Fertigungsverfahrens aus einem Aufbaumaterial, wobei das Aufbaumaterial ein Polycarbonat mit verbesserter Fließfähigkeit umfasst. Sie betrifft weiterhin die Verwendung eines Polycarbonats mit verbesserter Fließfähigkeit als Aufbaumaterial in einem additiven Schmelzschichtungsverfahren.

Der Einsatz von Polycarbonaten in additiven Fertigungsverfahren ("3D-Druckverfahren") ist grundsätzlich bekannt. So offenbart WO 2015/077053 A1 einen Gegenstand mit verringerter Dichte umfassend eine thermoplastische Polycarbonat-Zusammensetzung. Der Gegenstand weist eine Dichte (ASTM D792-00) von 80% bis 99%, bezogen auf das Gewicht eines ähnlichen massiven Spritzgusskörpers ohne Hohlräume auf. Weiterhin weist der Gegenstand eine Mikrostruktur, bestimmt durch optische Mikroskopie, mit 1 Volumen-% bis 20 Volumen-% an Hohlräumen auf, wobei wenigstens 80% der Hohlräume solche mit einem großen Verhältnis von Länge zu Breite sind und weniger als 20% der Hohlräume kugelförmige Hohlräume mit einem Durchmesser zwischen 10 und 100 Mikrometern sind. Die thermoplastische Polycarbonat-Zusammensetzung umfasst wenigstens 50 mol-% Bisphenol A und weist ein gewichtsmittleres Molekulargewicht ($M_w$) von 10000 bis 50000, eine Glasübergangstemperatur Tg von 130°C bis 180 °C, einen Gehalt an phenolischen OH-Gruppen von weniger als 50 ppm, einen Halogengruppengehalt von unter 100 ppm und einen Diarylcarbonat-Gehalt von weniger als 1 Gewichts-% auf. Der Gegenstand wird mittels einer Monofilament-basierten additiven Herstellungstechnik gefertigt.

WO 2015/195527 A1 betrifft ein Verfahren zur Herstellung eines thermoplastischen Gegenstands, in dem eine Mehrzahl von Schichten eines thermoplastischen Materials in einem vorbestimmten Muster abgelegt wird, um den Artikel zu bilden. Das thermoplastische Material umfasst eine thermoplastische Zusammensetzung mit einem Schmelzflussindex von 30 Gramm/10 Minuten bis 75 Gramm/10 Minuten gemäß ASTM D1238-04 bei entweder 230°C und 3,8 kg oder bei 300°C und 1,2 kg. Das thermoplastische Material kann ein Polycarbonat-Homopolymer, ein Polycarbonat-Copolymer, ein Polyester oder deren Kombination sein.

WO 2015/193818 A1 offenbart ein Verfahren zur Herstellung eines Gegenstands, in dem eine oder mehrere Schichten eines extrudierten Materials im geschmolzenen Zustand ein einem vorbestimmten Muster abgelegt werden, wobei wenigstens eine der Schichten aus einem Aufbaumaterial gebildet ist. Das Aufbaumaterial wird einer effektiven Dosis ultravioletter Strahlung ausgesetzt, um eine Quervernetzung innerhalb des Gegenstands auszulösen. Das Aufbaumaterial ist hierbei eine polymere Zusammensetzung, welche ein quervernetzbares Polycarbonat-Harz mit einer von einem Benzophenon abgeleiteten photoaktiven Gruppe enthält.

Polycarbonate sind Polymere mit einer vergleichsweise hohen Glasübergangstemperatur. Die Verarbeitungsparameter und Formulierungen für Polycarbonate müssen diesem Umstand Rechnung tragen. Es lassen sich in dieser Hinsicht zwei Polycarbonat-Typen unterscheiden: Extrusionstypen und Spritzgusstypen. Extrusionstypen sind darauf hin optimiert, nach dem Austritt aus einer Extrusionsdüse möglichst formstabil zu bleiben. Hingegen sollen Spritzgusstypen eine größere Fließfähigkeit aufweisen, um alle Strukturen des Formwerkzeugs reproduzieren zu können.

WO 2016/087296 A1, WO 2017/005735 A1 und WO 2017/005739 A1 betreffen in diesem Zusammenhang die Verwendung von Diglycerolestern als Fließhilfsmittel in Polycarbonatschmelzen. So offenbart WO 2016/087296 A1 beispielsweise eine Zusammensetzung, enthaltend: A) 20 Gew.-% bis 99,0 Gew.-% aromatisches Polycarbonat; B) 0,0 bis 1,0 Gew.-% mindestens eines Flammschutzmittels; C) 0,5 Gew.-% bis 50,0 Gew.-% mindestens einer Glasfaser, einer Carbonfaser und/oder Carbon-Nanotubes; D) 0,01 Gew.-% bis 3,0 Gew.-% mindestens eines Fließhilfsmittels, ausgewählt aus der Gruppe der Diglycerolester; E) 0,0 Gew.-% bis 5,0 Gew.-% mindestens eines Antitropfmittels; F) 0,0 Gew.-% bis 1,0 Gew.-% mindestens eines Thermostabilisators und G) 0,0 Gew.-% bis 10,0 Gew.-% weitere Additive.

Eine Aufgabe der vorliegenden Erfindung ist es, mindestens einen Nachteil des Standes der Technik wenigstens zu einem Teil zu überwinden. Weiterhin stellt sich die vorliegende Erfindung die Aufgabe, ein additives Herstellungsverfahren anzugeben, mit dem insbesondere gefüllte und/oder hochmolekulare Polycarbonat-basierte Aufbaumaterialien mit einer verbesserten Fließfähigkeit verarbeitet werden können.

Erfindungsgemäß gelöst wird die Aufgabe durch ein Verfahren gemäß Anspruch 1 und eine Verwendung gemäß Anspruch 13. Vorteilhafte Weiterbildungen sind in den Unteransprüchen angegeben. Sie können beliebig kombiniert werden, sofern sich aus dem Kontext nicht eindeutig das Gegenteil ergibt.

Erfindungsgemäß ist vorgesehen, dass das Aufbaumaterial Polycarbonat und ein Fließhilfsmittel, ausgewählt aus der Gruppe der Diglycerolester, umfasst. Somit wäre angesichts von WO 2016/087296 A1, WO 2017/005735 A1 und WO 2017/005739 A1 die eingesetzte Polycarbonatformulierung ein Spritzgusstyp. Überraschenderweise wurde gefunden, dass sich solche eine Formulierung auch in einem auf Extrusion basierenden additiven Fertigungsverfahren vorteilhaft einsetzen lässt.

Ein Verfahren zur Herstellung eines Gegenstands mittels eines additiven Fertigungsverfahrens umfasst die Schritte:

- Auftragen eines Filaments eines zumindest teilweise geschmolzenen Aufbaumaterials auf einen Träger, so dass

eine Lage des Aufbaumaterials erhalten wird, welche einem ersten ausgewählten Querschnitt des Gegenstands entspricht;

- Auftragen eines Filaments des zumindest teilweise geschmolzenen Aufbaumaterials auf eine zuvor aufgetragene Lage des Aufbaumaterials, so dass eine weitere Lage des Aufbaumaterials erhalten wird, welche einem weiteren ausgewählten Querschnitt des Gegenstands entspricht und welche mit der zuvor aufgetragenen Lage verbunden ist;

- Wiederholen des Schritts des Auftragens eines Filaments des zumindest teilweise geschmolzenen Aufbaumaterials auf eine zuvor aufgetragene Lage des Aufbaumaterials, bis der Gegenstand gebildet ist.

Das Aufbaumaterial umfasst:

A)20 Gew.-% bis 99,0 Gew.-% aromatisches Polycarbonat,

B)0,0 bis 1,0 Gew.-% mindestens eines Flammschutzmittels,

C) 0,0 Gew.-% bis 50,0 Gew.-% einer Komponente ausgewählt aus: Glasfasern, Carbonfasern, Carbon-Nanotubes, Graphit, Schlagzähmodifikatoren oder Mischungen aus mindestens zwei hiervon,

D) 0,01 Gew.-% bis 3,0 Gew.-% mindestens eines Fließhilfsmittels, ausgewählt aus der Gruppe der Diglycerolester,

E) 0,0 Gew.-% bis 5,0 Gew.-% mindestens eines Antitropfmittels,

F)0,0 Gew.-% bis 1,0 Gew.-% mindestens eines Thermostabilisators,

G) 0,0 Gew.-% bis 10,0 Gew.-% weitere Additive,

wobei sich im Aufbaumaterial die Komponenten A) bis G) zu ≤ 100 Gew.-% ergänzen.

Der herzustellende Gegenstand kann für sich alleine als Ziel des Herstellungsverfahrens dienen. Es ist aber auch möglich, dass der herzustellende Gegenstand Teil eines größeren Verbundes ist und dessen Herstellung einen Teilschritt in der Herstellung des Verbundes darstellt.

Erfindungsgemäß ist vorgesehen, dass der Gegenstand mittels eines additiven Fertigungsverfahrens ("3D-Drucken") aus einem Aufbaumaterial hergestellt wird. Das additive Fertigungsverfahren ist hierbei ein Schmelzschichtungsverfahren (Fused Filament Fabrication, FFF oder Fused Deposition Modeling, FDM). Ist die Anzahl der Wiederholungen für das Auftragen hinreichend gering, kann auch von einem zweidimensionalen Gegenstand gesprochen werden, der aufgebaut werden soll.

Solch ein zweidimensionaler Gegenstand lässt sich auch als Beschichtung charakterisieren. Beispielsweise können zu dessen Aufbau ≥ 1 bis ≤ 20 Wiederholungen für das Auftragen durchgeführt werden.

Die einzelnen Filamente, welche aufgetragen werden, können einen Durchmesser von ≥ 30 μm bis ≤ 2000 μm aufweisen, bevorzugt ≥ 40 μm bis ≤ 1000 μm und besonders bevorzugt ≥ 50 μm bis ≤ 500 μm.

Der erste Schritt des Verfahrens betrifft den Aufbau der ersten Lage auf einen Träger. Anschließend wird der zweite Schritt so lange ausgeführt, in dem auf zuvor aufgetragene lagen des Aufbaumaterials weiter Lagen aufgetragen werden, bis das gewünschte Endergebnis in Form des Gegenstands erhalten wird. Das zumindest teilweise aufgeschmolzene Aufbaumaterial verbindet sich mit bereits bestehenden Lagen des Materials, um eine Struktur in z-Richtung aufzubauen.

Bei der schichtweisen Modellherstellung verbinden sich damit die einzelnen Schichten zu einem komplexen Teil. Der Aufbau eines Körpers erfolgt üblich indem wiederholt, jeweils zeilenweise eine Arbeitsebene abgefahren wird (Bildung einer Schicht) und dann die Arbeitsebene "stapelnd" nach oben verschoben wird (Bilden mindestens einer weiteren Schicht auf der ersten Schicht), sodass eine Form schichtweise entsteht. Die Austrittstemperatur der Stoffmischungen aus der Düse kann beispielsweise 80°C bis 420°C betragen. Es ist zudem möglich, den Substrattisch und/oder einen gegebenenfalls vorhandenen Bauraum zu beheizen, beispielsweise auf 20°C bis 250°C. Hierdurch kann ein zu schnelles Abkühlen der aufgetragenen Schicht verhindert werden, sodass eine weitere, hierauf aufgetragene Schicht sich ausreichend mit der ersten Schicht verbindet.

Bevorzugt enthält das Aufbaumaterial keine weiteren Komponenten, sondern die Komponenten A) bis G) ergänzen sich zu 100 Gew.-%.

Das Aufbaumaterial kann beispielsweise eine Schmelze-Volumenfließrate MVR von 1 bis 100 $cm^3$/10 min, weiter bevorzugt von 2 bis 85 und besonders bevorzugt von 3 bis 75 $cm^3$/10 min, bestimmt nach ISO 1133 (Prüftemperatur 300 °C, Masse 1.2 kg), bestimmt nach ISO 1133 (Prüftemperatur 300°C, Masse 1,2 kg), und im Falle von in den

Zusammensetzungen enthaltenen Glasfasern eine Schlagzähigkeit nach Charpy, bestimmt nach DIN EN ISO 179 bei Raumtemperatur, von größer 35 $kJ/m^2$, aufweisen. Die Molekulargewichte Mw des Aufbaumaterials liegen zwischen 10000 g/mol und 50000 g/mol, bevorzugt zwischen 12000 g/mol und 40000g/mol und besonders bevorzugt zwischen 15000 g/mol und 38000 g/mol (ermittelt durch GPC mit einer BPA-Polycarbonat-Eichung).

Die Komponenten A bis G des Aufbaumaterials werden nachfolgend erläutert:

**Komponente A**

Polycarbonate im Sinne der vorliegenden Erfindung sind sowohl Homopolycarbonate als auch Copolycarbonate; die Polycarbonate können in bekannter Weise linear oder verzweigt sein. Erfindungsgemäß können auch Mischungen von Polycarbonaten verwendet werden.

Die Herstellung der Polycarbonate erfolgt in bekannter Weise aus Diphenolen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertné, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Die Herstellung aromatischer Polycarbonate erfolgt z.B. durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Diphenolen mit beispielsweise Diphenylcarbonat möglich.

Für die Herstellung der Polycarbonate geeignete Diphenole sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha$-$\alpha$'-Bis-(hydroxyphenyl)-diisopropylbenzole, Phtalimidine abgeleitet von Isatin- oder Phenolphthaleinderivaten sowie deren kernalkylierte, kernarylierte und kernhalogenierte Verbindungen.

Bevorzugte Diphenole sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan.

Besonders bevorzugte Diphenole sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan und Dimethyl-Bisphenol A.

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Fall der Homopolycarbonate wird nur ein Diphenol eingesetzt, im Fall der Copolycarbonate werden mehrere Diphenole eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol, sowie deren Mischungen.

Bevorzugte Kettenabbrecher sind die Phenole, welche ein- oder mehrfach mit $C_1$- bis $C_{30}$-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol.

Die Menge an einzusetzendem Kettenabbrecher beträgt bevorzugt 0,1 bis 5 Mol-%, bezogen auf Mole an jeweils eingesetzten Diphenolen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-1,hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol-%, bezogen auf Mole an jeweils eingesetzten Diphenolen.

Die Verzweiger können entweder mit den Diphenolen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Diphenolen eingesetzt.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5 -trimethylcyclohexan.

Zur Einarbeitung von Additiven wird die Komponente A bevorzugt in Form von Pulvern, Granulaten oder aus Gemischen aus Pulvern und Granulaten eingesetzt.

Beispielsweise wird bei Glasfaser-gefüllten Zusammensetzungen vorzugsweise eine Mischung aus den aromatischen Polycarbonaten A1 und A2 eingesetzt mit den folgenden Eigenschaften:
Die Menge des aromatischen Polycarbonats A1 beträgt, bezogen auf die Gesamtmenge an Polycarbonat, 25,0 bis 85,0 Gew.-%, bevorzugt 28,0 bis 84,0 Gew.-%, besonders bevorzugt 30,0 bis 83,0 Gew.-%, wobei dieses aromatische Polycarbonat auf Basis Bisphenol A mit einer bevorzugten Schmelze-Volumenfließrate MVR von 7 bis 15 $cm^3$/10 min, weiter bevorzugt mit einer Schmelze-Volumenfließrate MVR von 8 bis 12 $cm^3$/10 min und besonders bevorzugt mit einer Schmelze-Volumenfließrate MVR von 8 bis 11 $cm^3$/10 min, bestimmt gemäß ISO 1133 (Prüftemperatur 300°C, Masse 1,2 kg), ist.

Die Menge des pulverförmigen aromatischen Polycarbonats A2 beträgt, bezogen auf die Gesamtmenge an Polycarbonat, 3,0 bis 12,0 Gew.-%, bevorzugt 4,0 bis 11,0 Gew.-%, besonders bevorzugt 3,0 bis 10,0 Gew.-%, wobei dieses aromatische Polycarbonat bevorzugt auf Basis von Bisphenol A mit einer bevorzugten Schmelze-Volumenfließrate MVR von 3 bis 8 $cm^3$/10 min, weiter bevorzugt mit einer Schmelze-Volumenfließrate MVR von 4 bis 7 $cm^3$/10 min, und besonders bevorzugt mit einer Schmelze-Volumenfließrate MVR von 6 $cm^3$/10 min, bestimmt gemäß ISO 1133 (Prüftemperatur 300°C, Masse 1,2 kg), ist.

## Komponente B

Die Menge an Flammschutzmittel in dem erfindungsgemäßen Aufbaumaterial beträgt, bezogen auf das Gesamtgewicht des Aufbaumaterials, bevorzugt 0,001 bis 1,0 Gew.-%, weiter bevorzugt 0,05 bis 0,80 Gew.-%, besonders bevorzugt 0,10 bis 0,60 Gew.-%, ganz besonders bevorzugt 0,10 bis 0,40 Gew.-%.

In einer weiteren bevorzugten Ausführungsform ist im Aufbaumaterial als Flammschutzmittel ein Alkali- und/oder Erdalkalisalz einer aliphatischen oder aromatischen Sulfonsäure oder eines Sulfonamids enthalten.

Salze, die in dem erfindungsgemäßen Aufbaumaterial verwendet werden können, sind beispielsweise: Natriumperfluorbutansulfat, Kaliumperfluorbutansulfat, Natriumperfluormethansulfonat, Kaliumperfluormethansulfonat, Natriumperfluoroctansulfat, Kaliumperfluoroctansulfat, Natrium-2,5-dichlorbenzolsulfat, Kalium-2,5-dichlorbenzolsulfat, Natrium-2,4,5-trichlorbenzolsulfat, Kalium-2,4,5-trichlorbenzolsulfat, Natriummethylphosphonat, Kaliummethylphosphonat, Natrium-(2-phenyl-ethylen)-phosphonat, Kalium-(2-phenyl-ethylen)-phosphonat, Natriumpentachlorbenzoat, Kaliumpentachlorbenzoat, Natrium-2,4,6-trichlorbenzoat, Kaliuin-2,4,6-trichlorbenzoat, Natrium-2,4-dichlorbenzoat, Kalium-2,4-dichlorbenzoat, Lithiumphenylphosphonat, Natriumdiphenylsulfonsulfonat, Kaliumdiphenylsulfonsulfonat, Natrium-2-formylbenzolsulfonat, Kalium-2-formylbenzolsulfonat, Natrium-(N-benzolsulfonyl)-benzolsulfonamid, Kalium-(N-benzolsulfonyl)-benzolsulfonamid, Trinatriumhexafluoroaluminat, Trikaliumhexafluoroaluminat, Dinatriumhexafluorotitanat, Dikaliumhexafluorotitanat, Dinatriumhexafluorosilikat, Dikaliumhexafluorosilikat, Dinatriumhexafluorozirkonat, Dikaliumhexafluorozirkonat, Natriumpyrophosphat, Kaliumpyrophosphat, Natriummetaphosphat, Kaliummetaphosphat, Natriumtetrafluoroborat, Kaliumtetrafluoroborat, Natriumhexafluorophosphat, Kaliumhexafluorophosphat, Natrium- oder Kalium- oder Lithiumphosphat, Natriumnonafluor-1-butansulfbnat, Kaliumnonafluor-1-butansulfonat oder deren Mischungen.

Bevorzugt werden Natriumperfluorbutansulfat, Kaliumperfluorbutansulfat, Natriumperfluoroctansulfat, Kaliumperfluoroctansulfat, Natriumdiphenylsulfonsulfonat, Kaliumdiphenylsulfonsulfonat, Natrium-2,4,6-trichlorbenzoat, Kalium-2,4,6-trichlorbenzoat eingesetzt. Ganz besonders bevorzugt sind Kaliumnonafluor-1-butansulfonat oder Natriumdiphenylsulfonsulfonat oder Kaliumdiphenylsulfonsulfonat. Kaliumnonafluor-1-butansulfonat ist u.a. als Bayowet®C4 (Firma Lanxess, Leverkusen, Deutschland, CAS-Nr. 29420-49-3), RM64 (Firma Miteni, Italien) oder als 3M™ Perfluorobutansulfonylfluorid FC-51 (Firma 3M, USA) kommerziell erhältlich. Ebenfalls sind Mischungen der genannten Salze geeignet.

**Komponente C**

Das erfindungsgemäße Aufbaumaterial enthält 0,0 bis 50,0 Gew.-%, bevorzugt 0,50 bis 45,0 Gew.-%, insbesondere bevorzugt 1,0 bis 38,0 Gew.-%, weiter bevorzugt 1,0 bis 35,0 Gew.-%, einer Komponente ausgewählt aus: Glasfasern, Carbonfasern, Carbon-Nanotubes, Graphit, Schlagzähmodifikatoren oder Mischungen aus mindestens zwei hiervon.

Glasfasern:

Die Glasfasern bestehen aus einer Glaszusammensetzung, ausgewählt aus der Gruppe der M-, E-, A-, S-, R-, AR-, ECR-, D-, Q- oder C-Gläser, wobei E-, S- oder C-Glas bevorzugt sind.

Die Glaszusammensetzung wird bevorzugt in Form von Glasmassivkugeln, Glashohlkugeln, Glasperlen, Glasflakes, Glasbruch sowie Glasfasern eingesetzt, wobei die Glasfasern weiter bevorzugt sind.

Die Glasfasern können in Form von Endlosfasern (Rovings), Schnittglasfasern, Mahlfasern, Glasfasergeweben oder Mischungen der vorgenannten Formen eingesetzt werden, wobei die Schnittglasfasern sowie die Mahlfasern bevorzugt eingesetzt werden.

In einer weiteren bevorzugten Ausführungsform sind im Aufbaumaterial als Komponente C Glasfasern enthalten und das Aufbaumaterial weist weiterhin eine oder mehrere der folgenden Eigenschaften auf:

- das Aufbaumaterial enthält 0,001 bis 1,0 Gew.-% eines Flammschutzmittels
- die Glasfasern sind Schnittglasfasern
- im Aufbaumaterial sind Glasfasern eincompoundiert und die Glasfasern weisen eine Länge vor der Compoundierung von 0,5 mm bis 10 mm auf
- die Glasfasern weisen einen mittleren Faserdurchmesser von 5 bis 25 µm auf.

Besonders bevorzugt werden Schnittglasfasern eingesetzt. Die bevorzugte Faserlänge von eincompoundierten Schnittglasfasern beträgt vor der Compoundierung 0,5 bis 10 mm, weiter bevorzugt 1,0 bis 8 mm, ganz besonders bevorzugt 1,5 bis 6 mm.

Schnittglasfasern können mit unterschiedlichen Querschnitten eingesetzt werden. Bevorzugt werden runde, elliptische, ovale, 8-förmige und flache Querschnitte eingesetzt, wobei die runden, ovalen sowie flachen Querschnitte besonders bevorzugt sind.

Der Durchmesser von Rundfasem beträgt bevorzugt 5 bis 25 µm, weiter bevorzugt 6 bis 20 µm, besonders bevorzugt 7 bis 17 µm.

Bevorzugte Flach- und Ovalglasfasern weisen ein Querschnittverhältnis aus Höhe zu Breite von ca. 1,0 : 1,2 bis 1,0 : 8,0, bevorzugt 1,0 : 1,5 bis 1,0 : 6,0, besonders bevorzugt 1,0 : 2,0 bis 1,0 : 4,0 auf.

Die Flach- und Ovalglasfasern weisen bevorzugt eine durchschnittliche Faserhöhe von 4 µm bis 17µm, weiter bevorzugt von 6 µm bis 12 µm und besonders bevorzugt 6 µm bis 8 µm sowie eine durchschnittliche Faserbreite von 12 µm bis 30 µm, weiter bevorzugt 14 µm bis 28 µm und besonders bevorzugt 16 µm bis 26 µm auf.

Die Glasfasern können mit einer Glasschlichte an der Oberfläche der Glasfaser modifiziert sein. Bevorzugte Glasschlichten sind Epoxy-modifizierte, Polyurethan-modifizierte und nichtmodifizierte Silanverbindungen sowie Mischungen der vorgenannten Silanverbindungen.

Die Glasfasern können auch nicht mit einer Glasschlichtc modifiziert sein.

Die verwendeten Glasfasern zeichnen sich dadurch aus, dass die Auswahl der Faser nicht durch die Wechselwirkungscharakteristik der Faser mit der Polycarbonatmatrix beschränkt ist.

Sowohl für eine starke Anbindung an die Polymermatrix als auch bei einer nicht-anbindenden Faser zeigt sich eine Verbesserung der erfindungsgemäßen Eigenschaften des Aufbaumaterials.

Eine Anbindung der Glasfaser an die Polymermatrix ist an den Tieftemperaturbruchoberflächen bei rasterelektronenmikroskopischen Aufnahmen zu erkennen, wobei die größte Anzahl der gebrochenen Glasfasern auf derselben Höhe wie die Matrix gebrochen sind und nur vereinzelt Glasfasern aus der Matrix herausstehen. Rasterelektronenmikroskopische Aufnahmen zeigen für den umgekehrten Fall der nicht-anbindenden Charakteristik, dass die Glasfasern im Tieftemperaturbruch aus der Matrix stark herausstehen oder vollständig herausgeglitten sind.

Sofern Glasfasern enthalten sind, sind besonders bevorzugt 10 bis 35 Gew.-%, ganz besonders bevorzugt 10 bis 30 Gew.-% Glasfasern in dem Aufbaumaterial enthalten.

Carbonfasern:

Carbonfasern werden industriell aus Vorstufen wie z. B. Polyacrylfasern durch Pyrolyse (Carbonisierung) gewonnen. Man unterscheidet zwischen Filamentgarn und Kurzfasern.
In dem Aufbaumaterial werden bevorzugt Kurzfasern eingesetzt.
Die Länge der geschnittenen Fasern liegt bevorzugt zwischen 3 mm und 125 mm. Besonders bevorzugt werden Fasern der Länge 3 mm bis 25 mm eingesetzt.
Neben Fasern mit rundem Querschnitt sind auch Fasern mit kubischer Dimension (plättchenförmig) einsetzbar. Geeignete Abmessungen sind beispielsweise 2 mm x 4 mm x 6 mm.
Neben den geschnittenen Fasern sind auch gemahlene Carbonfasern einsetzbar. Bevorzugte gemahlene Carbonfasern weisen Längen von 50 µm bis 150 µm auf.
Die Carbonfasern sind gegebenenfalls mit organischen Schlichten gecoated, um besondere Anbindungen an die Polymermatrix zu ermöglichen.
Kurzschnittfasern und gemahlene Carbonfasern werden den polymeren Basismaterialien üblicherweise durch Compoundierung zugesetzt.
Mit Hilfe spezieller technischer Verfahren wird Kohlenstoff in feinsten Fäden angeordnet. Diese Filamente besitzen üblicherweise einen Durchmesser von 3 bis 10 µm. Aus den Filamenten können auch Rovings, Gewebe, Vliese, Bänder, Schläuche oder Ähnliches hergestellt werden.
Sofern die Zusammensetzungen Carbonfasern enthalten, sind bevorzugt 10 bis 30 Gew.-%, weiter bevorzugt 10 bis 20 Gew.-%, noch weiter bevorzugt 12 bis 20 Gew.-% Carbonfasern enthalten.

Carbon-Nanotubes

Kohlenstoffnanoröhrchen, auch CNT genannt, im Sinne der Erfindung sind alle einwandigen oder mehrwandigen Kohlenstoffnanoröhrchen vom Zylinder-Typ, Scroll-Typ oder mit zwiebelartiger Struktur. Bevorzugt werden mehrwandige Kohlenstoffnanoröhrchen vom Zylinder-Typ, Scroll-Typ oder deren Mischungen eingesetzt.
Die Kohlenstoffnanoröhrchen werden vorzugsweise in einer Menge von 0,1 bis 10 Gew.-%, besonders bevorzugt von 0,5 bis 8 Gew.-%, ganz besonders bevorzugt von 0,75 bis 6 Gew.-%, und insbesondere bevorzugt von 1 bis 5 Gew.-% (bezogen auf das Gesamtgewicht der Komponenten A, B, C und D) eingesetzt. In Masterbatches ist die Konzentration der Kohlenstoffnanoröhrchen gegebenenfalls größer und kann bis zu 80 Gew.-% betragen.
Besonders bevorzugt werden Kohlenstoffnanoröhrchen mit einem Verhältnis von Länge zu Außendurchmesser von größer 5, bevorzugt größer 40 verwendet.
Die Kohlenstoffnanoröhrchen werden besonders bevorzugt in Form von Agglomeraten eingesetzt, wobei die Agglomerate insbesondere einen mittleren Durchmesser im Bereich von 0,01 bis 5 mm, bevorzugt 0,05 bis 2 mm, besonders bevorzugt 0,1 - 1 mm haben.
Die einzusetzenden Kohlenstoffnanoröhrchen weisen besonders bevorzugt im Wesentlichen einen mittleren Durchmesser von 3 bis 100 nm, bevorzugt 5 bis 80 nm, besonders bevorzugt 6 bis 60 nm auf.

Graphit

Graphite werden in Form von Fasern, Stäbchen, Kugeln, Hohlkugeln, Plättchen und/oder in Pulverform, jeweils sowohl in aggregierter als auch in agglomerierter Form, bevorzugt in Plättchenform, in den Zusammensetzungen verwendet. Unter einem Partikel mit plättchenförmiger Struktur wird erfindungsgemäß ein Partikel verstanden, der eine flache Geometrie aufweist. So ist die Höhe der Partikel üblicherweise deutlich geringer im Vergleich zu der Breite oder Länge der Partikel. Derartige flache Partikel können wiederum zu Gebilden agglomeriert oder aggregiert sein.
In einer weiteren bevorzugten Ausführungsform wird als Graphit wenigstens teilweise expandierter Graphit eingesetzt. Dieses kann alleine oder in Mischung mit nicht expandiertem Graphit, besonders bevorzugt nur expandierter Graphit, erfolgen. Bei den expandierten Graphiten sind die einzelnen Basalebenen des Graphits durch eine spezielle Behandlung auseinandergetrieben, wodurch eine Volumenvergrößerung des Graphits, bevorzugt um den Faktor 200 bis 400, resultiert. Die Herstellung von expandierten Graphiten ist unter anderem in den Schriften US 1,137,373 A, US 1,191,383 A sowie US 3,404,061 A beschrieben. Erfindungsgemäß bevorzugt wird ein expandierter Graphit mit einer relativ hohen spezifischen Oberfläche (expandierte Graphitschuppen), ermittelt als BET-Oberfläche mittels Stickstoffadsorption nach ASTM D3037, verwendet. Bevorzugt werden Graphite mit einer BET- Oberfläche von > 5 $m^2$/g, besonders bevorzugt > 10 $m^2$/g und ganz besonders bevorzugt > 18 $m^2$/g in dem Aufbaumaterial eingesetzt.
Kommerziell verfügbare Graphite sind unter anderem Ecophit®GFG 5, Ecophit®GFG 50, Ecophit®GFG 200, Ecophit®GFG 350, Ecophit®GFG 500, Ecophit®GFG 900, Ecophit®GFG 1200 von der Firma SGL Carbon GmbH, TIMREX®BNB90, TIMREX®KS5-44, TIMREX®KS6, TIMREX®KS 150, TIMREX®SFG44, TIMREX®SFG150, TIMREX®C-THERM™ 001 und TIMREX®C-THERM™ 011 von der Firma TIMCAL Ltd., SC 20 O, SC 4000 O/SM und

SC 8000 O/SM von der Graphit Kropfmühl AG, Mechano-Cond 1, Mechano-Lube 2 und Mechano-Lube 4G von der Firma H.C. Carbon GmbH, Nord-Min 251 und Nord-Min 560T von der Firma Nordmann Rassmann GmbH und ASBURY A99, Asbury 230U und Asbury 3806 von der Firma Asbury Carbons.

Schlagzähmodifikatoren

In einer weiteren bevorzugten Ausführungsform umfasst der Schlagzähmodifikator ein oder mehrere Pfropfpolymerisat(e) von

C.1 5 bis 95 Gew.-% (vorzugsweise 30 bis 90 Gew.-%), wenigstens eines Vinylmonomeren auf

C.2 95 bis 5 Gew.-% (vorzugsweise 70 bis 10 Gew.-%) wenigstens einer Pfropfgrundlage, ausgewählt aus Dienkautschuken, EP(D)M-Kautschuken (d.h. solchen auf Basis Ethylen/Propylen und gegebenenfalls Dien), Acrylat-, Polyurethan-, Silikon-, Silikonacrylat-, Chloropren, Ethylen/Vinylacetat-Kautschuken oder Mischungen aus mindestens zwei hiervon.

Die Pfropfgrundlage C.2 hat bevorzugt eine mittlere Teilchengröße (dso-Wert) von 0,05 bis 10 μm, vorzugsweise 0, 1 bis 5 μm, besonders bevorzugt 0,2 bis 0,4 μm.

Monomere C.1 sind vorzugsweise Gemische aus

C.1.1 50 bis 99 Gew. -Teilen Vinylaromaten und/oder kernsubstituierten Vinylaromaten (wie Styrol, α-Methylstyrol, p-Methylstyrol, p-Chlorstyrol) und/oder (Meth)Acrylsäure-($C_1$- bis -Cs)-Alkylester, wie Methylmethacrylat, Ethylmethacrylat), und

C.1.2 1 bis 50 Gew. -Teilen Vinylcyaniden (ungesättigte Nitrile wie Acrylnitril und Methacrylnitril) und/oder (Meth)Acrylsäure-($C_1$- bis -$C_8$)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte Monomere C.1.1 sind ausgewählt aus mindestens einem der Monomere Styrol, α-Methylstyrol und Methylmethacrylat. Bevorzugte Monomere C.1.2 sind ausgewählt aus mindestens einem der Monomere Acrylnitril, Maleinsäureanhydrid und Methylmethacrylat. Besonders bevorzugte Monomere sind C.1.1 Styrol und C.1.2 Acrylnitril.

Bevorzugte Pfropfgrundlagen C.2 sind Silikonacrylatkautschuke, Dienkautschuke (beispielsweise auf Basis Butadien und Isopren) oder Gemische von Dienkautschuken. Unter Dienkautschuken im erfindungsgemäßen Sinne sind auch Copolymerisate von Dienkautschuken oder deren Gemischen mit weiteren copolymerisierbaren Monomeren (z.B. gemäß C.1.1 und C.1.2) zu verstehen.

Die Pfropfgrundlagen C.2 weisen im Allgemeinen eine Glasübergangstemperatur von < 10°C, vorzugsweise < 0°C, besonders bevorzugt < -10°C auf. Der Gelanteil der Pfropfgrundlage C.2 beträgt vorzugsweise mindestens 20 Gew.- %, im Falle von im Emulsionspolymerisation hergestellten Pfropfgrundlagen C.2 vorzugsweise mindestens 40 Gew.-% (in Toluol gemessen).

Vorzugsweise weist das Pfropfpolymerisat aus den Komponenten C.1 und C.2 eine Kern-Schale-Struktur auf, wobei die Komponente C.1 die Schale bildet (auch als Hülle bezeichnet) und die Komponente C.2 den Kern ausbildet (siehe bspw. Ullmann's Encyclopedia of Industrial Chemistry, VCH- Verlag, Vol. A21 , 1992, Seite 635 und Seite 656). Die Pfropfcopolymerisate der Komponente C werden durch radikalische Polymerisation, z.B. durch Emulsions-, Suspensions-, Lösungs- oder Massepolymerisation, vorzugsweise durch Emulsions- oder Massepolymerisation hergestellt.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten C auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß C.2 der Polymerisate C sind vorzugsweise Polymerisate aus Acrylsäurealkylestern, gegebenenfalls mit bis zu 40 Gew.- %, bezogen auf C.2 anderen polymerisierbaren, ethylenisch ungesättigten Monomeren. Zu den bevorzugten polymerisierbaren Acrylsäureestern gehören $C_1$- bis Cs-Alkylester, beispielsweise Methyl-, Ethyl-, Butyl-, n-Octyl-und 2-Ethylhexylester; Halogenalkylester, vorzugsweise Halogen-$C_1$- bis -$C_8$-alkylester, wie Chlorethylacrylat sowie Mischungen dieser Monomere.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di-und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.- %, bezogen auf die Pfropfgrundlage C.2. Bei cyclischen vernetzenden Monomeren mit mindestens drei ethylenisch ungesättigten Gruppen ist es vorteilhaft, die Menge auf unter 1 Gew.- % der Pfropfgrundlage C.2 zu beschränken.

Bevorzugte "andere" polymerisierbare, ethylenisch ungesättigte Monomere, die neben den Acrylsäureestern gegebenenfalls zur Herstellung der Pfropfgrundlage C.2 dienen können, sind z.B. Acrylnitril, Styrol, α-Methylstyrol, Acrylamide, Vinyl-$C_1$- bis -$C_6$-alkylether, Methylmethacrylat, Butadien. Bevorzugte Acrylatkautschuke als Pfropfgrundlage C.2 sind Emulsionspolymerisate, die einen Gelgehalt von mindestens 60 Gew.- % aufweisen.

Geeignete Silikonkautschuke gemäß C.2 können durch Emulsionspolymerisation hergestellt werden, wie beispielsweise in US-A 2891920 und US-A 3294725 beschrieben. Weitere geeignete Pfropfgrundlagen gemäß C.2 sind Silikonkautschuke mit pfropfaktiven Stellen, wie sie in den DE-A1 3 704 657, DE-A1 3 704 655, DE-A1 3 631 540 und DE-A1 3 631 539 beschrieben werden.

Als Pfropfgrundlagen C.2 sind erfindungsgemäß auch Silikonacrylat-Kautschuke geeignet. Diese Silikonacrylat-Kautschuke sind Komposit-Kautschuke mit pfropfaktiven Stellen, enthaltend 10-90 Gew.-% Silikonkautschuk- Anteil und 90 bis 10 Gew.-% Polyalkyl(meth)acrylatkautschuk-Anteil, wobei sich die beiden genannten Kautschuk-Komponenten im Komposit-Kautschuk gegenseitig durchdringen, so dass sie sich nicht wesentlich voneinander trennen lassen. Wenn im Komposit-Kautschuk der Anteil der Silikonkautschuk-Komponente zu hoch ist, haben die fertigen Harzzusammensetzungen nachteilige Oberflächeneigenschaften und eine verschlechterte Einfärbbarkeit. Wenn dagegen der Anteil der Polyalkyl(meth)acrylatkautschuk-Komponente im Komposit- Kautschuk zu hoch ist, wird die Schlagzähigkeit der fertigen Harzzusammensetzung nachteilig beeinflusst).

Silikonacrylat-Kautschuke sind bekannt und beispielsweise beschrieben in US-A 5,807,914, EP-A2 430134 und US-A 4888388. Vorzugsweise eingesetzt wird ein in Emulsionspolymerisation hergestelltes Pfropfpolymer mit C.1 Methylmethacrylat und C.2 Silikonacrylat-Komposit-Kautschuk.

Der Gelgehalt der Pfropfgrundlage C.2 wird bei 25°C in einem geeigneten Lösungsmittel bestimmt (M. Hoffmann, H. Krömer, R. Kuhn, Polymeranalytik I und II, Georg Thieme- Verlag, Stuttgart 1977).

Die mittlere Teilchengröße dso ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden. Die Glasübergangstemperatur wird mittels dynamischer Differenz-Thermoanalyse (DSC) gemäß der Norm DIN EN 61006 (DIN EN 61006:2004-11) bei einer Heizrate von 10 K/min mit Definition der $T_g$ als Mittelpunkttemperatur (Tangentenmethode) bestimmt.

## Komponente D

Die verwendeten Fließhilfsmittel D sind Diglycerolester. Dabei sind Ester auf Basis verschiedener Carbonsäuren geeignet. Auch können unterschiedliche Isomere von Diglycerol Basis für die Ester bilden. Neben Monoestern können auch Mehrfachester von Diglycerol eingesetzt werden. Anstelle von Reinverbindungen können auch Gemische verwendet werden.

Isomere von Diglycerol, welche die Basis für die erfindungsgemäß eingesetzten Diglycerolester bilden, sind die folgenden:

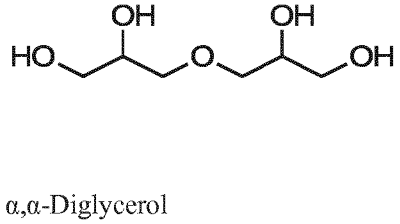

α,α-Diglycerol

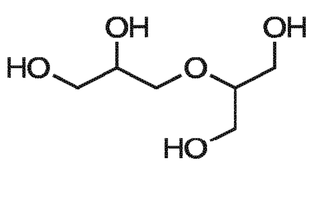

α,β-Diglycerol

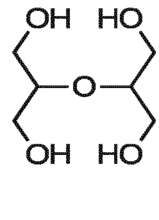

β,β-Diglycerol

Für die erfindungsgemäß verwendeten Diglycerolester können solche Isomere dieser Formeln eingesetzt werden, die einfach oder mehrfach verestert sind. Als Fließhilfsmittel einsetzbare Gemische bestehen aus den Diglyceroledukten sowie daraus abgeleiteten Esterendprodukten, beispielweise mit den Molekulargewichten 348 g/mol (Monolaurylester) oder 530 g/mol (Dilaurylester).

Die erfindungsgemäß in der Zusammensetzung enthaltenen Diglycerolester leiten sich vorzugsweise von gesättigten oder ungesättigten Monocarbonsäuren mit einer Kettenlänge von 6 bis 30 C-Atomen ab. Geeignete Monocarbonsäuren sind beispielsweise Caprylsäure ($C_7H_{15}COOH$, Octansäure), Caprinsäure ($C_9H_{19}COOH$, Decansäure), Laurinsäure ($C_{11}H_{23}COOH$, Dodecansäure), Myristinsäure ($C_{13}H_{27}COOH$, Tetradecansäure), Palmitinsäure ($C_{15}H_{31}COOH$, Hexadecansäure), Margarinsäure ($C_{16}H_{33}COOH$, Heptadecansäure), Stearinsäure ($C_{17}H_{35}COOH$, Octadecansäure), Arachinsäure ($C_{19}H_{39}COOH$, Eicosansäure), Behensäure ($C_{21}H_{43}COOH$, Docosansäure), Lignocerinsäure ($C_{23}H_{47}COOH$, Tetracosansäure), Palmitoleinsäure ($C_{15}H_{29}COOH$, (9Z)-Hexadeca-9-ensäure), Petroselinsäure ($C_{17}H_{33}COOH$, (6Z)-Octadeca-6-ensäure), Elaidinsäure ($C_{17}H_{33}COOH$, (9E)-Octadeca-9-ensäure), Linolsäure ($C_{17}H_{31}COOH$, (9Z,12Z)-Octadeca-9,12-diensäure), alpha- oder gamma-Linolensäure ($C_{17}H_{29}COOH$, (9Z,12Z,15Z)-Octadeca-9,12,15-triensäure und (6Z,9Z,12Z)-Octadeca-6,9,12-triensäure), Arachidonsäure ($C_9H_3COOH$, (5Z,8Z,11Z,14Z)-Eicosa-5,8,11,14-tetraensäure), Timnodonsäure ($C_{19}H_{29}COOH$, (5Z,8Z,11Z,14Z,17Z)-Eicosa-5,8,11,14,17-pentaensäure) und Cervonsäure ($C_{21}H_{31}COOH$, (4Z,7Z,10Z,13Z,16Z,19Z)-Docosa-4,7,10,13,16,19-hexaensäure). Besonders bevorzugt sind Laurinsäure, Palmitinsäure und/oder Stearinsäure.

In einer bevorzugten Ausführungsform des erfindungsgemäßen Verfahrens ist im Aufbaumaterial als Diglycerolester ein Ester der Formel (I)

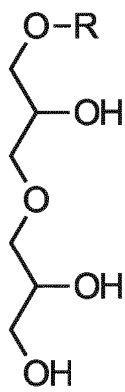

(I)

mit R = COCn$H_{2n+1}$ und/oder R = COR',
wobei n eine ganze Zahl ist und wobei R' ein verzweigter Alkylrest oder ein verzweigter oder unverzweigter Alkenylrest ist und $C_nH2_{n+1}$ ein aliphatischer, gesättigter linearer Alkylrest ist,
enthalten.

Es kann sich demzufolge auch um ein Gemisch verschiedener Diglycerolester handeln.

Bevorzugt eingesetzte Diglycerolester weisen einen HLB-Wert von mindestens 6, besonders bevorzugt 6 bis 12 auf, wobei unter dem HLB-Wert die sog. "hydrophilic-lipophilic balance" verstanden wird, die gemäß der Methode nach Griffin wie folgt berechnet wird:

$$HLB = 20 \text{ x } (1 - M_{lipophil}/M),$$

wobei $M_{lipophil}$ die Molmasse des lipophilen Anteils des Diglycerolesters ist und M die Molmasse des Diglycerolesters.

In einer weiteren bevorzugten Ausführungsform ist R = $COC_nH_{2n+1}$, wobei n eine ganze Zahl von 6-24, bevorzugt 8 bis 18, weiter bevorzugt 10 bis 16, besonders bevorzugt 12 ist. So kann $C_nH_{2n+1}$ beispielsweise n-Hexyl, n-Heptyl, n-Octyl, n-Nonyl, n-Decyl, n-Dodecyl, n-Tridecyl, n-Tetradecyl, n-Hexadecyl oder n-Octadecyl sein.

In einer weiteren bevorzugten Ausführungsform ist im Aufbaumaterial Diglycerolmonolaurylester enthalten (Diglycerolmonolaurat-Isomer mit dem Molekulargewicht 348 g/mol, welches als Hauptprodukt in einem Gemisch besonders bevorzugt ist). Die vorgenannten Estergruppierungen liegen erfindungsgemäß bevorzugt auch bei den anderen Isomeren des Diglycerols vor.

Die Menge an Diglycerolester beträgt, bezogen auf das Gesamtgewicht des Aufbaumaterials, 0,01 bis 3,0 Gew.-%, bevorzugt 0,10 bis 2,0 Gew.-%, besonders bevorzugt 0,15 bis 1,50 Gew.-% und ganz besonders bevorzugt 0,20 bis 1,0 Gew.-%.

## Komponente E

Bevorzugt enthalten die erfindungsgemäßen Zusammensetzungen ein Antitropfmittel. In einer weiteren bevorzugten Ausführungsform sind im Aufbaumaterial mindestens 0,05 Gew.-% eines Antitropfmittels enthalten. Die Menge an Antitropfmittel (Antidrippingmittel) beträgt bevorzugt 0,05 bis 5,0 Gew.-%, weiter bevorzugt 0,10 Gew.-% bis 2,0 Gew.-%, besonders bevorzugt 0,10 Gew.-% bis 1,0 Gew.-% mindestens eines Antitropfmittels.

Als Antitropfmittel wird dem Aufbaumaterial bevorzugt Polytetrafluorethylen (PTFE) zugefügt. PTFE ist in diversen Produktqualitäten kommerziell verfügbar. Hierzu zählen Hostaflon® TF2021 oder aber PTFE-Blends wie Metablen® A-3800 (ca. 40 Gew.-% PTFE, CAS 9002-84-0, und ca. 60 Gew.-% Methylmethacrylat/Butylacrylat Copolymer, CAS 25852-37-3, von Mitsubishi-Rayon) oder Blendex® B449 (ca. 50 Gew.-% PTFE und ca. 50 Gew.-% SAN [aus 80 Gew.-% Styrol und 20 Gew.-% Acrylnitril]) der Firma Chemtura. Bevorzugt wird Blendex® B449 verwendet.

## Komponente F

Als Thermostabilisatoren eignen sich bevorzugt Triphenylphosphin, Tris-(2,4-di-tert-butylphenyl)phosphit (Irgafos® 168), Tetrakis-(2,4-di-tert-butylphenyl)-[1,1-biphenyl]-4,4'-diylbisphosphonit, Trisisooctylphosphat, Octadecyl-3-(3,5-di-tert-butyl-4-hydroxyphenyl)-propionat (Irganox® 1076), Bis-(2,4-dicumylphenyl)-pentaerythritoldiphosphit (Doverphos® S-9228), Bis-(2,6-di-tert-butyl-4-methylphenyl)-pentaerythritoldiphosphit (ADK STAB PEP-36). Sie werden allein oder im Gemisch (z. B. Irganox® B900 (Gemisch aus Irgafos® 168 und Irganox® 1076 im Verhältnis 1:3) oder Doverphos® S-9228 mit Irganox® B900 bzw. Irganox® 1076) eingesetzt. Die Thermostabilisatoren werden bevorzugt in Mengen von 0,003 bis 0,2 Gew.-% eingesetzt.

## Komponente G

Zusätzlich sind optional bis zu 10,0 Gew.-%, bevorzugt 0,10 bis 8,0 Gew.-%, besonders bevorzugt 0,2 bis 3,0 Gew.-% sonstige übliche Additive ("weitere Additive") enthalten. Die Gruppe der weiteren Additive umfasst keine Flammschutzmittel, keine Antitropfmittel und keine Thermostabilisatoren, da diese bereits als Komponenten B, E und F beschrieben sind. Auch umfasst die Gruppe der weiteren Additive keine Glasfasern, Carbonfasern sowie Carbon-Nanotubes, da diese bereits von der Gruppe C erfasst sind. "Weitere Additive" sind auch keine Fließhilfsmittel aus der Gruppe der Diglycerolester, da diese bereits als Komponente D erfasst sind.

Solche Additive, wie sie üblicherweise bei Polycarbonaten zugesetzt werden, sind insbesondere die in EP-A 0 839 623, WO-A 96/15102, EP-A 0 500 496 oder "Plastics Additives Handbook", Hans Zweifel, 5th Edition 2000, Hanser Verlag, München beschriebenen Antioxidantien, UV-Absorber, IR-Absorber, Antistatika, optischen Aufheller, Lichtstreumittel, Farbmittel wie Pigmente, auch anorganischen Pigmente, Ruß und/oder Farbstoffe, anorganischen Füllstoffe wie Titandioxid oder Bariumsulfat in den für Polycarbonat üblichen Mengen. Diese Additive können einzeln oder auch im Gemisch zugesetzt werden.

Bevorzugte Additive sind spezielle UV-Stabilisatoren, die eine möglichst geringe Transmission unterhalb 400 nm und eine möglichst hohe Transmission oberhalb von 400 nm besitzen. Für den Einsatz in der erfindungsgemäßen Zusammensetzung besonders geeignete Ultraviolett-Absorber sind Benzotriazole, Triazine, Benzophenone und/oder arylierte Cyanoacrylate.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin® 234, BASF, Ludwigshafen), 2-(2'-Hydroxy-5'-(tert.-octyl)-phenyl)-benzotriazol (Tinuvin® 329, BASF, Ludwigshafen),), Bis-(3-(2H-benztriazolyl)-2-hydroxy-5-tert.-octyl)methan (Tinuvin® 360, BASF, Ludwigshafen), 2-(4,6-Diphenyl-1,3,5-triazin-2-yl)-5-(hexyloxy)-phenol (Tinuvin® 1577, BASF, Ludwigshafen), sowie Benzophenone wie 2,4-Dihydroxybenzophenon (Chimasorb® 22 , BASF, Ludwigshafen) und 2-Hydroxy-4-(octyloxy)-benzophenon (Chimassorb® 81, BASF, Ludwigshafen), 2,2-Bis[[(2-cyano-1-oxo-3,3-diphenyl-2-propenyl)oxy]-methyl]-1,3-propandiylester (9CI) (Uvinul® 3030, BASF AG Ludwigshafen), 2-[2-Hydroxy-4-(2-ethylhexyl)oxy]phenyl-4,6-di(4-phenyl)phenyl-1,3,5-triazine (Tinuvin® 1600, BASF, Ludwigshafen), Tetraethyl-2,2'-(1,4-phenylen-dimetliyliden)-bismalonat (Hostavin® B-Cap, Clariant AG) oder N-(2-Ethoxyphenyl)-N'-(2-ethylphenyl)-ethandiamid (Tinuvin® 312, CAS-Nr. 23949-66-8, BASF, Ludwigshafen).

Besonders bevorzugte spezielle UV-Stabilisatoren sind Tinuvin® 360, Tinuvin® 329 und/oder Tinuvin® 312, ganz besonders bevorzugt sind Tinuvin® 329 und Tinuvin® 312.

Es können auch Mischungen dieser Ultraviolett-Absorber eingesetzt werden.

Bevorzugt enthält die Zusammensetzung Ultraviolett-Absorber in einer Menge bis 0,8 Gew.-%, bevorzugt 0,05 Gew.-% bis 0,5 Gew.-% , weiter bevorzugt 0,1 Gew.-% bis 0,4 Gew.-%, bezogen auf die Gesamtzusammensetzung.

Bevorzugt ist die Zusammensetzung frei von zusätzlichen Entformungsmitteln.

Besonders bevorzugt ist mindestens ein Thermostabilisator (Komponente F) und gegebenenfalls als weiteres Additiv ein UV-Absorber enthalten, wenn als Füllstoff Glasfasern eingesetzt werden.

Die Herstellung des Aufbaumaterials, enthaltend die Komponenten A bis D, ggf. ohne B, und ggf. E bis G, erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen aus Granulaten oder Granulaten und Pulvern mit den Komponenten B bis G verwendet werden.

Es können auch Vormischungen verwendet werden, die aus Lösungen der Mischungskomponenten in geeigneten Lösungsmitteln hergestellt worden sind, wobei gegebenenfalls in Lösung homogenisiert wird und das Lösungsmittel anschließend entfernt wird.

Insbesondere können hierbei die Komponenten B bis G der erfindungsgemäßen Zusammensetzung durch bekannte Verfahren oder als Masterbatch in das Polycarbonat eingebracht werden.

Die Verwendung von Masterbatchen ist zum Einbringen der Komponenten B bis G, einzeln oder in Mischung, bevorzugt.

In diesem Zusammenhang kann das Aufbaumaterial in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend zu einem Filament oder einem anderen geeigneten Formkörper für additive Fertigungsverfahren extrudiert werden. Es können auch einzelne Komponenten vorgemischt werden und dann die restlichen Ausgangsstoffe einzeln und/oder ebenfalls gemischt hinzugegeben werden.

Die Zusammenführung und Durchmischung einer Vormischung in der Schmelze kann auch in der Plastifiziereinheit einer Spritzgussmaschine erfolgen. Hierbei wird die Schmelze im anschließenden Schritt direkt in einen Formkörper, insbesondere ein Filament, überführt.

Ein besonders bevorzugtes Aufbaumaterial umfasst:

A) 20 Gew.-% bis 99,0 Gew.-% aromatisches Polycarbonat,

B) 0,0 Gew.-% bis 1,0 Gew.-% mindestens eines Flammschutzmittels, ausgewählt aus der Gruppe Natriumperfluorbutansulfat, Kaliumperfluorbutansulfat, Natriumperfluormethansulfonat, Kaliumperfluormethansulfonat, Natriumperfluoroctansulfat, Kaliumperfluoroctansulfat, Natrium-2,5 - dichlorbenzolsulfat, Kalium-2,5-dichlorbenzolsulfat, Natrium-2,4,5-trichlorbenzolsulfat, Kalium-2,4,5-trichlorbenzolsulfat, Natriummethylphosphonat, Kaliummethylphosphonat, Natrium-(2-phenyl-ethylen)-phosphonat, Kalium-(2-phenyl-ethylen)-phosphonat, Natriumpentachlorbenzoat, Kaliumpentachlorbenzoat, Natrium-2,4,6-trichlorbenzoat, Kalium-2,4,6-trichlorbenzoat, Natrium-2,4-dichlorbenzoat, Kalium-2,4-dichlorbenzoat, Lithiumphenylphosphonat, Natriumdiphenylsulfonsulfonat, Kaliumdiphenylsulfonsulfonat, Natrium-2-formylbenzolsulfonat, Kalium-2-formylbenzolsulfonat, Natrium-(N-benzolsulfonyl)-benzolsulfonamid, Kalium-(N-benzolsulfonyl)-benzolsulfonamid, Trinatriumhexafluoroaluminat, Trikaliumhexafluoroaluminat, Dinatriumhexafluorotitanat, Dikaliumhexafluorotitanat, Dinatriumhexafluorosilikat, Dikaliumhexafluorosilikat, Dinatriumhexafluorozirkonat, Dikaliumhexafluorozirkonat, Natriumpyrophosphat, Kaliumpyrophosphat, Natriummetaphosphat, Kaliummetaphosphat, Natriumtetrafluoroborat, Kaliumtetrafluoroborat, Natriumhexafluorophosphat, Kaliumhexafluorophosphat, Natrium- oder Kalium- oder Lithiumphosphat, Natriumnonafluor-1-butansulfonat, Kaliumnonafluor-1-butansulfonat oder deren Mischungen.

C) 0,5 Gew.-% bis 50,0 Gew.-% mindestens einer Glasfaser, einer Carbonfaser und/oder Carbon-Nanotubes,

D) 0,01 Gew.-% bis 3,0 Gew.-% mindestens eines Fließhilfsmittels, ausgewählt aus der Gruppe der Diglycerolester, bevorzugt einer der Formel (I), ganz besonders bevorzugt Diglycerolmonolaurylester,

E) 0,0 Gew.-% bis 5,0 Gew.-% mindestens eines Antitropfmittels,

F) 0,0 Gew.-% bis 1,0 Gew.-% mindestens eines Thermostabilisators,

G) 0,0 Gew.-% bis 10,0 Gew.-% weitere Additive, ausgewählt aus der Gruppe der UV-Absorber, IR-Absorber, Farbmittel, Ruß und/oder anorganischen Füllstoffe.

Dieses Aufbaumaterial enthält ganz besonders bevorzugt mindestens eine Glasfaser, wobei noch weiter bevorzugt als Verstärkungsfaser nur Glasfaser enthalten ist.

Alternativ ganz besonders bevorzugt enthält das Aufbaumaterial eine Carbonfaser, wobei noch weiter bevorzugt als Verstärkungsfaser nur Carbonfaser enthalten ist.

In einer weiteren bevorzugten Ausführungsform weist das Aufbaumaterial eine Schmelze-Volumenfließrate

MVR von 2 bis 85 $cm^3$/10 min und besonders bevorzugt von 3 bis 75 $cm^3$/10 min, bestimmt nach ISO 1133 (Prüftemperatur 300°C, Masse 1,2 kg), auf und der E-Modul, bestimmt nach ISO 527, beträgt mindestens 2100 $kg*m^{-1}*S^{-2}$.

In einer weiteren bevorzugten Ausführungsform wird das Verfahren innerhalb eines Bauraums durchgeführt und die Temperatur des Bauraums ist ≥ 10 °C (bevorzugt ≥ 25 °C, mehr bevorzugt ≥ 50 °C) geringer als die Glasübergangstemperatur $T_g$ des Aufbaumaterials (bestimmt durch DSC gemäß DIN EN ISO 11357 bei einer Heizrate von 10 °C/min). Damit ist besonders bei komplexen und großen Bauteilen mit langer Fertigungszeit eine deutlich geringere thermische Belastung und bessere Maßhaltigkeit des Bauteils verbunden.

Die vorliegende Erfindung betrifft weiterhin die Verwendung eines Aufbaumaterials in einem additiven Schmelzschichtungsverfahren, wobei das Aufbaumaterial umfasst:

A)20 Gew.-% bis 99,0 Gew.-% aromatisches Polycarbonat,

B)0,0 bis 1,0 Gew.-% mindestens eines Flammschutzmittels,

C) 0,0 Gew.-% bis 50,0 Gew.-% einer Komponente ausgewählt aus: Glasfasern, Carbonfasern, Carbon-Nanotubes, Graphit, Schlagzähmodifikatoren oder Mischungen aus mindestens zwei hiervon,

D) 0,01 Gew.-% bis 3,0 Gew.-% mindestens eines Fließhilfsmittels, ausgewählt aus der Gruppe der Diglycerolester,

E) 0,0 Gew.-% bis 5,0 Gew.-% mindestens eines Antitropfmittels,

F)0,0 Gew.-% bis 1,0 Gew.-% mindestens eines Thermostabilisators,

G) 0,0 Gew.-% bis 10,0 Gew.-% weitere Additive.

Zu den Komponenten A bis G gelten die im Zusammenhang mit dem erfindungsgemäßen Verfahren ausgeführten Details, welche zur Vermeidung von Wiederholungen hier nicht erneut diskutiert werden. Ebenso lassen sich für das Aufbaumaterial in der erfindungsgemäßen Verwendung die gleichen bevorzugten Ausführungsformen anwenden wie im erfindungsgemäßen Verfahren. Es sei lediglich angemerkt, dass vorzugsweise im Aufbaumaterial als Diglycerolester ein Ester der Formel (I)

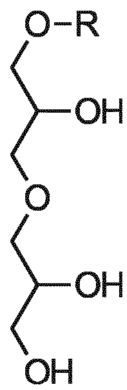
(I)

mit R = $COC_nH_{2n+1}$ und/oder R = COR',

wobei n eine ganze Zahl ist und wobei R' ein verzweigter Alkylrest oder ein verzweigter oder unverzweigter Alkenylrest ist und $C_nH_{2n+1}$ ein aliphatischer, gesättigter linearer Alkylrest ist, enthalten ist. Ganz besonders bevorzugt handelt es sich um Diglycerolmonolaurylester.

Die Herstellung von erfindungsgemäß geeigneten Aufbaumaterialien wird anhand der nachfolgenden Beispiele (s. WO 2016/087296 A1) beschrieben.

**1. Beschreibung der Rohstoffe und Prüfmethoden**

Die erfindungsgemäß geeigneten Polycarbonatzusammensetzungen werden auf üblichen Maschinen, wie beispielsweise Mehrwellenextrudern, durch Compoundierung, gegebenenfalls unter Zugabe von Additiven und anderen

Zuschlagstoffen, bei Temperaturen zwischen 280°C und 360°C hergestellt.

Die erfindungsgemäßen Compounds zu den folgenden Beispielen wurden auf einem Extruder ZE 25 der Fa. Berstorff mit einem Durchsatz von 10 kg/Std. hergestellt. Die Schmelzetemperatur betrug 275 °C.

Es wurden als Polycarbonatbasis A Mischungen aus den Komponenten A-1, A-2, A-3, A-4, A-6 bzw. A-7 eingesetzt.

Komponente A-1: Lineares Polycarbonat auf Basis von Bisphenol A mit einer Schmelze-Volumenfließrate MVR von 9,5 $cm^3$/10 min (gemäß ISO 1133, bei einer Prüftemperatur 300°C und 1,2 kg Belastung).

Komponente A-2: Lineares Polycarbonat in Pulverform auf Basis von Bisphenol A mit einer Schmelze-Volumenfließrate MVR von 6 $cm^3$/10 min (gemäß ISO 1133, bei einer Prüftemperatur von 300°C und 1,2 kg Belastung).

Komponente A-3: Lineares Polycarbonat auf Basis von Bisphenol A mit einer Schmelze-Volumenfließrate MVR von 12,5 $cm^3$/10 min (gemäß ISO 1133, bei einer Prüftemperatur 300°C und 1,2 kg Belastung).

Komponente A-4: Lineares Polycarbonat auf Basis von Bisphenol A mit einer Schmelze-Volumenfließrate MVR von 6 $cm^3$/10 min (gemäß ISO 1133, bei einer Prüftemperatur 300°C und 1,2 kg Belastung).

Komponente A-6: Pulver eines linearen Polycarbonates auf Basis von Bisphenol A mit einer Schmelze-Volumenfließrate MVR von 19 $cm^3$/10 min (gemäß ISO 1133, bei einer Prüftemperatur 300°C und 1,2 kg Belastung).

Komponente A-7: Lineares Polycarbonat auf Basis von Bisphenol A mit einer Schmelze-Volumenfließrate MVR von 19 $cm^3$/10 min (gemäß ISO 1133, bei einer Prüftemperatur 300°C und 1,2 kg Belastung).

Komponente B: Kaliumperfluor-1-butansulfonat, kommerziell erhältlich als Bayowet® C4 der Firma Lanxess, Leverkusen, Deutschland, CAS-Nr. 29420-49-3.

Komponente C-1: CS108F-14P, geschnittene Kurzglasfasern (nicht anbindend) der Firma 3B mit einem durchschnittlichen Faserdurchmesser von 14 μm und einer durchschnittlichen Faserlänge von 4,0 mm vor der Compoundierung.

Komponente C-2: CS 7942, geschnittene Kurzglasfasern (anbindend) der Firma Lanxess AG mit einem durchschnittlichen Faserdurchmesser von 14 μm und einer durchschnittlichen Faserlänge von 4,5 mm vor der Compoundierung.

Komponente C-3: Carbonfaser CF Tenax A HT C493, geschnittene Kohlenstoff-Kurzfaser der Firma Toho Tenax Europe GmbH Germany mit thermoplastischem Präparationsauftrag und mit einer durchschnittlichen Schnittlänge von 6 mm vor der Compoundierung.

Komponente C-4: CNT; Baytubes C150 HP, Agglomerate von Multi-Wall Nanoröhrchen mit niedrigem Außendurchmesser, enger Durchmesserverteilung und ultra-hoch Längen-zu Durchmesser-Verhältnis. Anzahl Wände: 3-15 / Außendurchmesser: 13-16 nm / Außendurchmesserverteilung: 5-20 nm / Länge: 1 bis >10 μm / Innendurchmesser: 4 nm / Innendurchmesserverteilung: 2-6 nm.

Komponente C-5: Carbonfaser AC 3101; geschnittene Kohlenstoff-Kurzfaser der Firma Dow Aksa (Türkei) mit einer durchschnittlichen Länge von 6 mm vor der Compoundierung.

Komponente C-6: Carbonfaser Tairyfil CS2516, geschnittene Kohlenstoff-Kurzfaser der Firma Formosa Plastic Corporation Taiwan mit einer durchschnittlichen Länge von 6 mm vor der Compoundierung.

Komponente C-7: Glasfaser CS Special 7968, geschnittene Kurzglasfasern der Firma Lanxess AG mit einem durchschnittlichen Faserdurchmesser von 11 μm und einer durchschnittlichen Faserlänge von 4,5 mm vor der Compoundierung.

Komponente C-8: Glasfaser CSG 3PA-830, geschnittene Flachglasfaser der Firma Nittobo mit einem Dicken-/Längenverhältnis von 1:4.

Komponente C-9: Glasfaser MF7980, gemahlene Glasfaser der Firma Lanxess. Unbeschlichtetes E-Glas mit einer

Faserdicke von 14 μm und einer mittleren Faserlänge von 190 μm.

Komponente D: Poem DL-100 (Diglycerolmonolaurat) der Fa. Riken Vitamin als Fließhilfsmittel.

Komponente E: Polytetrafluorethylen (Blendex® B449 (ca. 50 Gew.-% PTFE und ca. 50 Gew.-% SAN [aus 80 Gew.-% Styrol und 20 Gew.-% Acrylnitril] der Firma Chemtura).

Komponente F: Triisooctylphosphat (TOF) der Firma Lanxess AG.

Komponente G-1: Glycerinmonostearat (GMS) der Firma Emery Oleochemicals.

Komponente G-2: Pentareythrittetrastearat (PETS) der Firma Emery Oleochemicals.

Komponente G-3: Elvaloy 1820 AC; Ethylen-Methylacrylat-copolymer der Firma Dupont.

Die Schlagzähigkeit nach Charpy wurde nach ISO 7391/179eU an einseitig angespritzten Prüfstäben der Dimension 80 x 10 x 4 mm bei Raumtemperatur gemessen.

Die Kerbschlagzähigkeit nach Charpy wurde nach ISO 7391/179A an einseitig angespritzten Prüfstäben der Dimension 80 x 10 x 3 mm bei Raumtemperatur gemessen.

Die Vicat-Erweichungstemperatur VST/B50 als Maß für die Wärmeformbeständigkeit wurde gemäß ISO 306 an Prüfkörpern der Abmessung 80 x 10 x 4 mm mit einer Stempellast von 50 N und einer Aufheizgeschwindigkeit von 50°C/h mit dem Gerät Coesfeld Eco 2920 der Firma Coesfeld Materialtest bestimmt.

Das Brandverhalten wurde nach UL94 V an Stäben der Abmessung 127 x 12,7 x 1,0 mm, 127 x 12,7 x 1,5 mm und 127 x 12,7 x 3 mm gemessen. Zur Bestimmung der Brandklasse wurden jeweils fünf Versuche durchgeführt, und zwar zunächst nach Lagerung über 48h bei 23°C und anschließend bei Lagerung über 7 Tage bei 70°C.

Das Brandverhalten wurde nach UL94-5V an Stäben der Abmessung 127 x 12,7 x 1,5 mm, 127 x 12,7 x 2,0 mm und 127 x 12,7 x 3,0 mm sowie Platten der Abmessung 150 x 105 x 1,5 mm, 150 x 105 x 2,0 mm, 150 x 105 x 3,0 mm gemessen.

Der E-Modul wurde gemäß ISO 527 an einseitig angespritzten Schulterstäben mit einem Kern der Dimension 80 x 10 x 4 mm gemessen.

Die Bestimmung der Schmelzviskositäten erfolgte nach ISO 11443 (Kegelplatteanordnung).

Die Bestimmung des Schmelze-Volumenfließrate (MVR) erfolgte nach ISO 1133 (bei einer Prüftemperatur von 300 °C, Masse 1,2 kg) mit dem Gerät Zwick 4106 der Firma Zwick Roell.

## 2. Zusammensetzungen

**Tabelle 1a: Erfindungsgemäß geeignete Aufbaumaterialien, enthaltend Glasfasern, und Vergleichsbeispiele 1V und 4V**

| Beispiel | | IV | 2 | 3 | 4V | 5 | 6 |
|---|---|---|---|---|---|---|---|
| A-1 | [Gew.-%] | 79,35 | 79,35 | 79,35 | 70 | 70 | 70 |
| A-2<br>A-2 Pulver | [Gew.-%]<br>[Gew.-%] | 3,65<br>6,29 | 3,65<br>6,09 | 3,65<br>5,89 | 3<br>6,29 | 3<br>6,09 | 3<br>5,89 |
| B | [Gew.-%] | 0,2 | 0,2 | 0,2 | 0,2 | 0,2 | 0,2 |
| C-1 | [Gew.-%] | 10 | 10 | 10 | - | - | - |
| C-2 | [Gew.-%] | - | - | - | 20 | 20 | 20 |
| F | [Gew.-%] | 0,01 | 0,01 | 0,01 | 0,01 | 0,01 | 0,01 |
| D | [Gew.-%] | - | 0,2 | 0,4 | - | 0,2 | 0,4 |
| E | [Gew.-%] | 0,5 | 0,5 | 0,5 | 0,5 | 0,5 | 0,5 |
| MVR | [$cm^3$/10 min] | 5,5 | 10,8 | 16,1 | 4,8 | 10,3 | 20,8 |

(fortgesetzt)

| Beispiel | | IV | 2 | 3 | 4V | 5 | 6 |
|---|---|---|---|---|---|---|---|
| VST/B50 | [°C] | 148 | 144,9 | 141,7 | 149,3 | 146,2 | 143,2 |
| Charpy-Schlagzähigkeit bei RT | [kJ/m$^2$] | 193 | 149 | 111 | 48 | 59 | 56 |
| E-Modul | [N/mm$^2$] | 3933 | 4080 | 4147 | 5869 | 6062 | 6194 |
| UL 94 V 1,5 mm Bewertung | | V0 | V0 | V0 | V0 | V0 | V0 |

In Tabelle 1a sind zu Aufbaumaterialien 2, 3, 5 und 6 wichtige Eigenschaften angegeben. Dem sind die Vergleichsbeispiele 1V und 4V gegenübergestellt. Aus der Tabelle ist zu erkennen, dass die Zusammensetzungen gemäß den Vergleichsbeispielen, welche keinen Diglycerolester enthalten, deutlich schlechtere Schmelze-Volumenfließraten MVR aufweisen.

Die erfindungsgemäß geeigneten Aufbaumaterialien zeigen neben der erheblichen Verbesserung der Schmelze-Volumenfließrate und der Verbesserung der Schmelzviskosität eine Erhöhung des E-Moduls (Steifigkeit).

**Tabelle 1b: Erfindungsgemäß geeignete Aufbaumaterialien, enthaltend Glasfasern, FR-Additiv und Vergleichsbeispiele 7V und 10V**

| Die Werte für die Schmelzviskositäten in der folgenden Tabelle sind jeweils angegeben zu den Scherraten in [1/sec]. | | | | | | | |
|---|---|---|---|---|---|---|---|
| **Beispiel** | | **7V** | **8** | **9** | **10V** | **11** | **12** |
| A-1 | [Gew.-%] | 70 | 70 | 70 | 70 | 70 | 70 |
| A-4 | [Gew.-%] | 3,00 | 3,00 | 3,00 | 3,00 | 3,00 | 3,00 |
| A-2 | [Gew.-%] | 6,29 | 6,09 | 5,89 | 6,3 | 6,1 | 5,9 |
| C-2 | [Gew.-%] | 20 | 20 | 20 | 20 | 20 | 20 |
| B | [Gew.-%] | 0,2 | 0,2 | 0,2 | 0,2 | 0,2 | 0,2 |
| E | [Gew.-%] | 0,5 | 0,5 | 0,5 | 0,5 | 0,5 | 0,5 |
| D | [Gew.-%] | - | 0,2 | 0,4 | - | 0,2 | 0,4 |
| F | [Gew.-%] | 0,01 | 0,01 | 0,01 | - | - | - |
| **Prüfungen:** | | | | | | | |
| MVR | [ml/10 min] | 4,8 | 11,1 | 17,6 | 4,7 | 10,2 | 19,4 |
| IMVR20’ | [ml/10 min] | 4,8 | 11,9 | 19,7 | 4,9 | 12,1 | 20,8 |
| Schmelzvisk. bei 300°C | | | | | | | |
| eta 50 | [Pas] | 782 | 431 | 294 | 667 | 379 | 286 |
| eta 100 | [Pas] | 672 | 375 | 260 | 627 | 346 | 254 |
| eta 200 | [Pas] | 583 | 326 | 220 | 542 | 303 | 212 |
| eta 500 | [Pas] | 454 | 265 | 175 | 425 | 252 | 168 |

(fortgesetzt)

| | | | | | | | |
|---|---|---|---|---|---|---|---|
| Schmelzvisk. bei 300°C | | | | | | | |
| eta 1000 | [Pas] | 350 | 216 | 147 | 329 | 210 | 143 |
| eta 1500 | [Pas] | 291 | 186 | 129 | 279 | 181 | 128 |
| eta 5000 | [Pas] | 152 | 109 | 79 | 141 | 102 | 77 |
| Schmelzvisk. bei 320°C | | | | | | | |
| eta 50 | [Pas] | 413 | 195 | 141 | 269 | 166 | 124 |
| eta 100 | [Pas] | 375 | 177 | 130 | 244 | 153 | 112 |
| eta 200 | [Pas] | 336 | 157 | 114 | 214 | 135 | 98 |
| eta 500 | [Pas] | 277 | 134 | 92 | 182 | 109 | 80 |
| eta 1000 | [Pas] | 229 | 115 | 79 | 153 | 95 | 67 |
| eta 1500 | [Pas] | 197 | 101 | 73 | 138 | 87 | 62 |
| eta 5000 | [Pas] | 109 | 65 | 52 | 83 | 58 | 44 |
| Schmelzvisk. bei 340°C | | | | | | | |
| eta 50 | [Pas] | 199 | 111 | - | 199 | 95 | - |
| eta 100 | [Pas] | 185 | 104 | 83 | 184 | 90 | - |
| eta 200 | [Pas] | 162 | 92 | 77 | 160 | 86 | 61 |
| eta 500 | [Pas] | 137 | 78 | 65 | 131 | 74 | 54 |
| eta 1000 | [Pas] | 120 | 70 | 54 | 112 | 65 | 48 |
| eta 1500 | [Pas] | 109 | 66 | 49 | 102 | 59 | 44 |
| eta 5000 | [Pas] | 70 | 46 | 36 | 67 | 42 | 32 |
| Vicat VSTB 120 | [°C] | 153,1 | 148,2 | 145,9 | 153,3 | 148,6 | 145,8 |
| Schlagversuch ISO7391/179eU 4mm RT | [kJ/m$^2$] | 59 | 66 | 65 | 61 | 66 | 64 |
| **Zugversuch** | | | | | | | |
| Streckspannung | [N/mm$^2$] | 102 | 106 | 112 | 101 | 108 | - |
| Streckdehnung | [%] | 3,3 | 3,2 | 3,2 | 3,3 | 3,3 | - |
| Reißfestigkeit | [N/mm$^2$] | 101 | 106 | 111 | 100 | 108 | 11 |
| Reiß dehnung | [%] | 3,3 | 3,2 | 3,1 | 3,5 | 3,3 | 3,1 |
| E-Modul | [N/mm$^2$] | 5972 | 6050 | 6295 | 5834 | 6118 | 6246 |
| **UL94V in 1,5 mm** | | | | | | | |
| (48h 23°C) | | V1 | V1 | V1 | V0 | V1 | V1 |
| Einzelbewertung V0/V1/V2/Vn.b. | | 3/2/-/- | 3/2/-/- | -/5/-/- | 5/-/-/- | 3/2/-/- | 3/2/-/- |
| Nachbrennzeit | [s] | 60 | 88 | 80 | 49 | 65 | 77 |
| Nachbrennzeit (1. Brennsatz ) | [s] | - | - | - | - | - | - |
| (7d 70°C ) | | V1 | V1 | V1 | V1 | V1 | V1 |
| Einzelbewertung V0/V1/V2/Vn.b. | | 4/1/-/- | 3/2/-/- | 3/2/-/- | 1/4/-/- | 4/1/-/- | 3/2/-/- |
| Nachbrennzeit | [s] | 48 | 69 | 72 | 102 | 62 | 79 |

(fortgesetzt)

| **UL94V in 1,5 mm** | | | | | | | |
|---|---|---|---|---|---|---|---|
| Nachbrennzeit (1. Brennsatz) | [s] | 75 | - | - | - | - | - |
| Gesamtbewertung | | V1 | V1 | V1 | V1 | V1 | V1 |
| Vn.b.: nicht bestanden | | | | | | | |

In Tabelle 1b sind zu erfindungsgemäß geeigneten Aufbaumaterialien 8, 9, 11 und 12 wichtige Eigenschaften angegeben. Dem sind die Vergleichsbeispiele 7V und 10V gegenübergestellt. Aus der Tabelle ist zu erkennen, dass die Zusammensetzungen gemäß den Vergleichsbeispielen, welche keinen Diglycerolester enthalten, deutlich schlechtere Schmelze-Volumenfließraten MVR aufweisen. Die Fließkurven der erfindungsgemäß geeigneten Aufbaumaterialien zeigen bei den verschiedenen Messtemperaturen über den gesamten Scherbereich jeweils deutlich reduzierte Schmelzviskositäten, was eine verbesserte Fließfähigkeit bedeutet.

Die erfindungsgemäß geeigneten Aufbaumaterialien zeigen neben der erheblichen Verbesserung der rheologischen Eigenschaften eine Erhöhung des E-Moduls (Steifigkeit) unter Beibehaltung der guten Brandeigenschaften.

**Tabelle 1c: Erfindungsgemäß geeignete Aufbaumaterialien, enthaltend Glasfasern und FR-Additiv, und Vergleichsbeispiele 13V und 16V**

| Die Werte für die Schmelzviskositäten in der folgenden Tabelle sind jeweils angegeben zu den Scherraten in [1/sec]. | | | | | | | |
|---|---|---|---|---|---|---|---|
| **Beispiele** | | **13V** | **14** | **15** | **16V** | **17** | **18** |
| A-7 | [Gew.-%] | 30,00 | 30,00 | 30,00 | 30,00 | 30,00 | 30,00 |
| A-2 | [Gew.-%] | 50,42 | 50,42 | 50,42 | 50,42 | 50,42 | 50,42 |
| A-6 | [Gew.-%] | 5,55 | 5,35 | 5,15 | 5,54 | 5,34 | 5,14 |
| C-1 | [Gew.-%] | 14,00 | 14,00 | 14,00 | 14,00 | 14,00 | 14,00 |
| D | [Gew.-%] | - | 0,20 | 0,40 | - | 0,20 | 0,40 |
| B | [Gew.-%] | 0,03 | 0,03 | 0,03 | 0,03 | 0,03 | 0,03 |
| F | [Gew.-%] | - | - | - | 0,01 | 0,01 | 0,01 |
| **Prüfungen:** | | | | | | | |
| MVR | [ml/10 min] | 7,2 | 13,4 | 16,5 | 7,4 | 13,5 | 22,6 |
| IMVR20’ | [ml/10 min] | 7,2 | 13,6 | 16,8 | 7,6 | 14,2 | 24,2 |
| Schmelzvisk. bei 300°C | | | | | | | |
| eta 50 | [Pas] | 623 | 492 | 371 | 666 | 493 | 370 |
| eta 100 | [Pas] | 577 | 438 | 313 | 568 | 416 | 302 |
| eta 200 | [Pas] | 502 | 378 | 268 | 504 | 354 | 247 |
| eta 500 | [Pas] | 400 | 313 | 231 | 408 | 299 | 207 |
| eta 1000 | [Pas] | 316 | 258 | 197 | 328 | 247 | 176 |
| eta 1500 | [Pas] | 268 | 222 | 173 | 274 | 213 | 157 |
| eta 5000 | [Pas] | 139 | 119 | 102 | 142 | 119 | 94 |
| Schmelzvisk. bei 320°C | | | | | | | |
| eta 50 | [Pas] | 349 | 286 | 270 | 391 | 355 | 243 |
| eta 100 | [Pas] | 337 | 248 | 222 | 327 | 286 | 197 |
| eta 200 | [Pas] | 297 | 235 | 183 | 293 | 233 | 165 |

(fortgesetzt)

| | | | | | | | |
|---|---|---|---|---|---|---|---|
| Schmelzvisk. bei 320°C | | | | | | | |
| eta 500 | [Pas] | 252 | 198 | 149 | 250 | 194 | 133 |
| eta 1000 | [Pas] | 214 | 165 | 130 | 211 | 166 | 116 |
| eta 1500 | [Pas] | 186 | 146 | 119 | 185 | 148 | 105 |
| eta 5000 | [Pas] | 108 | 88 | 78 | 103 | 95 | 72 |
| Schmelzvisk. bei 340°C | | | | | | | |
| eta 50 | [Pas] | 169 | 232 | 164 | 278 | 255 | 115 |
| eta 100 | [Pas] | 168 | 186 | 137 | 204 | 207 | 109 |
| eta 200 | [Pas] | 167 | 148 | 114 | 192 | 171 | 99 |
| eta 500 | [Pas] | 147 | 127 | 99 | 162 | 142 | 83 |
| eta 1000 | [Pas] | 125 | 110 | 86 | 140 | 124 | 73 |
| eta 1500 | [Pas] | 112 | 101 | 79 | 127 | 113 | 69 |
| eta 5000 | [Pas] | 78 | 70 | 54 | 83 | 71 | 52 |
| Vicat VSTB 50 | [°C] | 150,2 | 146,9 | 145,0 | 150,5 | 146,3 | 143,8 |
| **UL94V in 3.0mm** | | | | | | | |
| (48h 23°C) | | V0 | V0 | V0 | V0 | V0 | V0 |
| Einzelbewertung V0/V1/V2/Vn.b. | | 5/-/-/- | 5/-/-/- | 5/-/-/- | 5/-/-/- | 5/-/-/- | 5/-/-/- |
| Nachbrennzeit | [s] | 24 | 28 | 29 | 32 | 21 | 41 |
| Nachbrennzeit (1. Brennsatz ) | [s] | - | - | - | - | - | - |
| (7d 70°C) | | V0 | V0 | V0 | V0 | V0 | V0 |
| Einzelbewertung V0/V1/V2/Vn.b. | | 5/-/-/- | 5/-/-/- | 5/-/-/- | 5/-/-/- | 5/-/-/- | 5/-/-/- |
| Nachbrennzeit | [s] | 23 | 22 | 33 | 26 | 24 | 22 |
| Nachbrennzeit (1. Brennsatz ) | [s] | - | - | - | - | - | - |
| Gesamtbeurteilung | [s] | V0 | V0 | V0 | V0 | V0 | V0 |
| Vn.b.: nicht bestanden | | | | | | | |

In Tabelle 1c sind zu erfindungsgemäß geeigneten Aufbaumaterialien 14, 15, 17 und 18 wichtige Eigenschaften angegeben. Dem sind die Vergleichsbeispiele 13V und 16V gegenübergestellt. Aus der Tabelle ist zu erkennen, dass die Zusammensetzungen gemäß den Vergleichsbeispielen, welche keinen Diglycerolester enthalten, deutlich schlechtere Schmelze-Volumenfließraten MVR aufweisen. Die Fließkurven der erfindungsgemäß geeigneten Aufbaumaterialien zeigen bei den verschiedenen Messtemperaturen über den gesamten Scherbereich jeweils deutlich reduzierte Schmelzviskositäten, was eine verbesserte Fließfähigkeit bedeutet.

Die erfindungsgemäß geeigneten Aufbaumaterialien zeigen überraschenderweise neben der erheblichen Verbesserung der rheologischen Eigenschaften auch gute Brandeigenschaften.

**Tabelle 1d: Erfindungsgemäß geeignete Aufbaumaterialien, enthaltend Glasfasern und FR-Additiv, und Vergleichsbeispiele 19V und 22V**

| Die Werte für die Schmelzviskositäten in der folgenden Tabelle sind jeweils angegeben zu den Scherraten in [1/sec]. | | | | | | | |
|---|---|---|---|---|---|---|---|
| **Beispiel** | | **19V** | **20** | **21** | **22V** | **23** | **24** |
| A-7 | [Gew.-%] | 73,00 | 73,00 | 73,00 | 73,00 | 73,00 | 73,00 |
| A-6 | [Gew.-%] | 4,94 | 4,74 | 4,54 | 4,93 | 4,73 | 4,53 |
| C-7 | [Gew.-%] | 20,00 | 20,00 | 20,00 | 20,00 | 20,00 | 20,00 |
| B | [Gew.-%] | 0,06 | 0,06 | 0,06 | 0,06 | 0,06 | 0,06 |
| G-3 | [Gew.-%] | 2,00 | 2,00 | 2,00 | 2,00 | 2,00 | 2,00 |
| D | [Gew.-%] | - | 0,20 | 0,40 | - | 0,20 | 0,40 |
| F | [Gew.-%] | - | - | - | 0,01 | 0,01 | 0,01 |
| **Prüfungen:** | | | | | | | |
| MVR | [ml/10 min] | 8,5 | 15,7 | 33,4 | 8,2 | 18,2 | 28,9 |
| IMVR20’ | [ml/10 min] | 8,7 | 16,1 | 32,3 | 8,7 | 18,9 | 28,3 |
| Vicat VSTB50 | [°C] | 151,8 | 147,6 | 143,7 | 151,4 | 147,9 | 144 |
| Schmelzvisk. bei 300°C | | | | | | | |
| eta 50 | [Pas] | 462 | 308 | 148 | 508 | 291 | 193 |
| eta 100 | [Pas] | 415 | 255 | 135 | 449 | 260 | 176 |
| eta 200 | [Pas] | 369 | 242 | 124 | 399 | 235 | 157 |
| eta 500 | [Pas] | 302 | 203 | 107 | 320 | 200 | 133 |
| eta 1000 | [Pas] | 236 | 167 | 94 | 250 | 167 | 117 |
| eta 1500 | [Pas] | 201 | 143 | 87 | 213 | 144 | 104 |
| eta 5000 | [Pas] | 108 | 83 | 57 | 117 | 86 | 65 |
| Schmelzvisk. bei 320°C | | | | | | | |
| eta 50 | [Pas] | 261 | 182 | 97 | 287 | 183 | 130 |
| eta 1 00 | [Pas] | 247 | 164 | 85 | 266 | 159 | 111 |
| eta 200 | [Pas] | 238 | 149 | 77 | 239 | 139 | 101 |
| eta 500 | [Pas] | 203 | 128 | 67 | 204 | 124 | 88 |
| eta 1000 | [Pas] | 169 | 111 | 60 | 169 | 108 | 77 |
| eta 1500 | [Pas] | 145 | 99 | 56 | 144 | 97 | 71 |
| eta 5000 | [Pas] | 89 | 61 | 40 | 85 | 61 | 47 |
| Schmelzvisk. bei 340°C | | | | | | | |
| eta 50 | [Pas] | 159 | 99 | 60 | 183 | 120 | 76 |
| eta 100 | [Pas] | 151 | 97 | 56 | 168 | 105 | 71 |
| eta 200 | [Pas] | 138 | 88 | 49 | 156 | 94 | 63 |
| eta 500 | [Pas] | 122 | 80 | 42 | 137 | 83 | 58 |
| eta 1000 | [Pas] | 108 | 72 | 39 | 119 | 74 | 51 |
| eta 1500 | [Pas] | 98 | 66 | 35 | 105 | 68 | 47 |

(fortgesetzt)

| | | | | | | | |
|---|---|---|---|---|---|---|---|
| Schmelzvisk. bei 340°C | | | | | | | |
| eta 5000 | [Pas] | 65 | 45 | 28 | 68 | 46 | 35 |
| **UL94V in 1,0 mm** | | | | | | | |
| (48h 23°C) | | V1 | V2 | V2 | V2 | V1 | V2 |
| Einzelbew. V0/V1/V2/Vn.b. | | 4/1/-/- | 3/-/2/- | 2/1/2/- | 3/1/1/- | 3/2/-/- | -/-/5/- |
| Nachbrennzeit | [s] | 73 | 61 | 55 | 81 | 97 | 72 |
| Nachbrennzeit (1. Brennsatz ) | [s] | 118 | - | - | >115 | - | - |
| (7d 70°C) | | V2 | V2 | V2 | V2 | V2 | V2 |
| Einzelbew. V0/V1/V2/Vn.b. | | 3/-/2/- | 1/2/2/- | 1/-/4/- | -/3/2/- | 1/-/4/- | -/-/5/- |
| Nachbrennzeit | [s] | 67 | 92 | 63 | 118 | 54 | 75 |
| Nachbrennzeit (1. Brennsatz ) | [s] | - | - | - | - | - | - |
| Gesamtbewertung | | V2 | V2 | V2 | V2 | V2 | V2 |
| Vn.b.: nicht bestanden | | | | | | | |

In Tabelle 1d sind zu erfindungsgemäß geeigneten Aufbaumaterialien 20, 21, 23 und 24 wichtige Eigenschaften angegeben. Dem sind die Vergleichsbeispiele 19V und 22V gegenübergestellt. Aus der Tabelle ist zu erkennen, dass die Zusammensetzungen gemäß den Vergleichsbeispielen, welche keinen Diglycerolester enthalten, deutlich schlechtere Schmelze-Volumenfließraten MVR aufweisen. Die Fließkurven der erfindungsgemäß geeigneten Aufbaumaterialien zeigen bei den verschiedenen Messtemperaturen über den gesamten Scherbereich jeweils deutlich reduzierte Schmelzviskositäten, was eine verbesserte Fließfähigkeit bedeutet.

**Tabelle 1e: Erfindungsgemäß geeignete Aufbaumaterialien, enthaltend Glasfasern, und Vergleichsbeispiele 25V und 28V**

| | | | | | | | |
|---|---|---|---|---|---|---|---|
| Die Werte für die Schmelzviskositäten in der folgenden Tabelle sind jeweils angegeben zu Scherraten in [1/sec]. den | | | | | | | |
| **Beispiel** | | **25V** | **26** | **27** | **28V** | **29** | **30** |
| A-3 | [Gew.-%] | 63,00 | 63,00 | 63,00 | 63,00 | 63,00 | 63,00 |
| A-2 | [Gew.-%] | 7,00 | 6,80 | 6,60 | 6,99 | 6,79 | 6,59 |
| C-8 | [Gew.-%] | 30,00 | 30,00 | 30,00 | 30,00 | 30,00 | 30,00 |
| D | [Gew.-%] | - | 0,20 | 0,40 | - | 0,20 | 0,40 |
| F | [Gew.-%] | - | - | - | 0,01 | 0,01 | 0,01 |
| **Prüfungen** | | | | | | | |
| MVR 300°C/1,2 kg | [$cm^3$/10 min] | 4,5 | 9,1 | 15,3 | 4,5 | 8,8 | 15,3 |
| IMVR20' 300°C/1,2 kg | [$cm^3$/10 min] | 5,1 | 10,4 | 19,9 | 5,6 | 10,9 | 19,0 |
| Schmelzvisk. bei 300°C | | | | | | | |
| eta 50 | [Pas] | 763 | 532 | 376 | 721 | 540 | 420 |
| eta 100 | [Pas] | 669 | 483 | 340 | 677 | 455 | 367 |

(fortgesetzt)

| | | | | | | | |
|---|---|---|---|---|---|---|---|
| Schmelzvisk. bei 300°C | | | | | | | |
| eta 200 | [Pas] | 581 | 430 | 301 | 591 | 377 | 324 |
| eta 500 | [Pas] | 452 | 346 | 249 | 460 | 302 | 266 |
| eta 1000 | [Pas] | 346 | 274 | 205 | 348 | 258 | 218 |
| eta 1500 | [Pas] | 294 | 235 | 174 | 303 | 222 | 189 |
| eta 5000 | [Pas] | 154 | 129 | 104 | 158 | 132 | 113 |
| Schmelzvisk. bei 320°C | | | | | | | |
| eta 50 | [Pas] | 397 | 278 | 133 | 372 | 299 | 220 |
| eta 1 00 | [Pas] | 60 | 237 | 128 | 365 | 255 | 180 |
| eta 200 | [Pas] | 321 | 209 | 114 | 325 | 228 | 165 |
| eta 500 | [Pas] | 265 | 176 | 95 | 250 | 199 | 132 |
| eta 1000 | [Pas] | 221 | 154 | 83 | 206 | 167 | 110 |
| eta 1500 | [Pas] | 190 | 139 | 75 | 170 | 149 | 95 |
| eta 5000 | [Pas] | 110 | 88 | 55 | 100 | 93 | 68 |
| Schmelzvisk. bei 340°C | | | | | | | |
| eta 50 | [Pas] | 178 | 114 | 84 | 215 | 120 | 104 |
| eta 100 | [Pas] | 168 | 106 | 72 | 187 | 115 | 92 |
| eta 200 | [Pas] | 153 | 95 | 65 | 159 | 105 | 82 |
| eta 500 | [Pas] | 131 | 84 | 57 | 141 | 92 | 66 |
| eta 1000 | [Pas] | 118 | 76 | 51 | 117 | 89 | 57 |
| eta 1500 | [Pas] | 112 | 71 | 48 | 113 | 83 | 52 |
| eta 5000 | [Pas] | 75 | 55 | 35 | 73 | 65 | 42 |

In Tabelle 1e sind zu erfmdungsgemäß geeigneten Aufbaumaterialien 26, 27, 29 und 30 wichtige Eigenschaften angegeben. Dem sind die Vergleichsbeispiele 25V und 28V gegenübergestellt. Aus der Tabelle ist zu erkennen, dass die Zusammensetzungen gemäß den Vergleichsbeispielen, welche keinen Diglycerolester enthalten, deutlich schlechtere Schmelze-Volumenfließraten MVR aufweisen. Die Fließkurven der erfindungsgemäß geeigneten Aufbaumaterialien zeigen bei den verschiedenen Messtemperaturen über den gesamten Scherbereich jeweils deutlich reduzierte Schmelzviskositäten, was eine verbesserte Fließfähigkeit bedeutet.

**Tabelle 1f: Erfindungsgemäß geeignete Aufbaumaterialien, enthaltend Glasfasern, und Vergleichsbeispiele 31V und 34V**

| Die Werte für die Schmelzviskositäten in der folgenden Tabelle sind jeweils angegeben zu den Scherraten in [1/sec]. zu den | | | | | | | |
|---|---|---|---|---|---|---|---|
| **Beispiele** | | **31V** | **32** | **33** | **34V** | **35** | **36** |
| A-3 | [Gew.-%] | 63,00 | 63,00 | 63,00 | 63,00 | 63,00 | 63,00 |
| A-2 | [Gew.-%] | 7,00 | 6,80 | 6,60 | 6,99 | 6,79 | 6,59 |
| C-9 | [Gew.-%] | 30,00 | 30,00 | 30,00 | 30,00 | 30,00 | 30,00 |
| D | [Gew.-%] | - | 0,20 | 0,40 | - | 0,20 | 0,40 |
| F | [Gew.-%] | - | - | - | 0,01 | 0,01 | 0,01 |

(fortgesetzt)

| Prüfungen | | | | | | | |
|---|---|---|---|---|---|---|---|
| MVR 300°C/1,2 kg | [cm3/10 min] | 5,3 | 10,1 | 19,4 | 5,5 | 9,9 | 19,8 |
| IMVR20' 300°C/1,2 kg | [cm3/10 min] | 5,9 | 13,4 | 24,3 | 5,8 | 12,6 | 24,8 |
| Schmelzvisk. bei 300°C | | | | | | | |
| eta 50 | [Pas] | 699 | 586 | 436 | 630 | 534 | 397 |
| eta 100 | [Pas] | 633 | 531 | 390 | 628 | 523 | 390 |
| eta 200 | [Pas] | 580 | 483 | 361 | 579 | 486 | 369 |
| eta 500 | [Pas] | 480 | 408 | 313 | 479 | 411 | 302 |
| eta 1000 | [Pas] | 384 | 334 | 263 | 381 | 336 | 264 |
| eta 1500 | [Pas] | 317 | 282 | 230 | 318 | 284 | 227 |
| eta 5000 | [Pas] | 157 | 145 | 125 | 158 | 147 | 122 |
| Schmelzvisk. bei 320°C | | | | | | | |
| eta 50 | [Pas] | 328 | 250 | 175 | 260 | 281 | 200 |
| eta 100 | [Pas] | 305 | 237 | 172 | 255 | 267 | 191 |
| eta 200 | [Pas] | 282 | 233 | 161 | 250 | 254 | 182 |
| eta 500 | [Pas] | 250 | 212 | 152 | 237 | 230 | 169 |
| eta 1000 | [Pas] | 217 | 186 | 138 | 211 | 201 | 153 |
| eta 1500 | [Pas] | 193 | 167 | 124 | 192 | 180 | 142 |
| eta 5000 | [Pas] | 111 | 104 | 81 | 116 | 116 | 91 |
| Schmelzvisk. bei 340°C | | | | | | | |
| eta 50 | [Pas] | 142 | 105 | 69 | 174 | 147 | 90 |
| eta 100 | [Pas] | 137 | 102 | 66 | 173 | 140 | 87 |
| eta 200 | [Pas] | 133 | 99 | 62 | 166 | 137 | 84 |
| eta 500 | [Pas] | 128 | 96 | 60 | 156 | 120 | 82 |
| eta 1000 | [Pas] | 119 | 93 | 56 | 142 | 105 | 79 |
| eta 1500 | [Pas] | 112 | 88 | 56 | 132 | 95 | 77 |
| eta 5000 | [Pas] | 77 | 65 | 46 | 85 | 69 | 58 |

In Tabelle 1f sind zu erfindungsgemäß geeigneten Aufbaumaterialien 32, 33, 35 und 36 wichtige Eigenschaften angegeben. Dem sind die Vergleichsbeispiele 31V und 34V gegenübergestellt. Aus der Tabelle ist zu erkennen, dass die Zusammensetzungen gemäß den Vergleichsbeispielen, welche keinen Diglycerolester enthalten, deutlich schlechtere Schmelze-Volumenfließraten MVR aufweisen. Die Fließkurven der erfindungsgemäß geeigneten Aufbaumaterialien zeigen bei den verschiedenen Messtemperaturen über den gesamten Scherbereich jeweils deutlich reduzierte Schmelzviskositäten, was eine verbesserte Fließfähigkeit bedeutet.

**Tabelle 1g: Erfindungsgemäß geeignete Aufbaumaterialien, enthaltend Glasfasern, und Vergleichsbeispiel 37V**

| **Rezeptur** | | **37V** | **38** | **39** | **40** | **41** | **42** | **43** |
|---|---|---|---|---|---|---|---|---|
| A-1 | [Gew.-%] | 79,35 | 79,35 | 79,35 | 74,35 | 74,35 | 69,35 | 69,35 |
| A-4 | [Gew.-%] | 3,65 | 3,65 | 3,65 | 3,65 | 3,65 | 3,65 | 3,65 |
| A-2 | [Gew.-%] | 5,85 | 6,1 | 5,9 | 6,1 | 5,9 | 6,1 | 5,9 |
| G-2 | [Gew.-%] | 0,45 | - | - | - | - | - | - |
| D | [Gew.-%] | - | 0,2 | 0,4 | 0,2 | 0,4 | 0,2 | 0,4 |
| Blendex 449 | [Gew.-%] | 0,2 | 0,2 | 0,2 | 0,2 | 0,2 | 0,2 | 0,2 |
| E | [Gew.-%] | 0,5 | 0,5 | 0,5 | 0,5 | 0,5 | 0,5 | 0,5 |
| C-1 | [Gew.-%] | 10 | 10 | 10 | 15 | 15 | 20 | 20 |
| **Prüfungen:** | | | | | | | | |
| MVR | [$cm^3$/10 min] | 5,7 | 10,4 | 16,6 | 8,1 | 11,9 | 6,6 | 11,9 |
| IMVR20' | [$cm^3$/10 min] | 5,8 | 11,1 | 17,3 | 8,4 | 12,3 | 7,2 | 11,0 |
| Delta MVR/IMVR20' | | **0,1** | **0,7** | **0,7** | **0,3** | **0,4** | **0,6** | **-0,9** |
| KET | [°C] | 137 | 137 | 133 | 137 | 132 | 136 | 133 |
| UL94-5V in 3,0mm | | | | | | | | |
| Stabprüfung | | ja | ja | ja | ja | ja | ja | ja |
| Plattenprüfung | | bestanden | bestanden | bestanden | bestanden | bestanden | bestanden | bestanden |
| Klassifizierung | | 94-5VA | 94-5VA | 94-5VA | 94-5VA | 94-5VA | 94-5V A | 94-5VA |
| UL94-5V in 2,0mm | | | | | | | | |
| Stabprüfung | | ja | ja | ja | ja | ja | ja | ja |
| Plattenprüfung | | nein | nein | nein | bestanden | bestanden | bestanden | bestanden |
| Klassifizierung | | 94-5VB | 94-5VB | 94-5VB | 94-5VA | 94-5VA | 94-5VA | 94-5VA |
| UL94-5V in 1,5mm | | | | | | | | |
| Stabprüfung | | ja | nein | nein | nein | ja | ja | nein |
| Plattenprüfung | | nein | - | - | - | nein | bestanden | - |
| Klassifizierung | | 94-5VB | - | - | - | 94-5VB | 94-5VA | - |

In Tabelle 1g sind zu erfindungsgemäß geeigneten Aufbaumaterialien 38 bis 43 wichtige Eigenschaften angegeben. Dem ist das Vergleichsbeispiel 37V gegenübergestellt. Aus der Tabelle ist zu erkennen, dass die Zusammensetzung gemäß dem Vergleichsbeispiel, welches keinen Diglycerolester enthält, eine deutlich schlechtere Schmelze-Volumenfließrate MVR aufweist.

Beispiel 41 zeigt, dass trotz Verbesserung der Fließrate die UL 94-5V Klassifizierung im Brandtest erhalten bleibt. Beispiel 42 zeigt, dass bei annähernd gleichbleibendem MVR sogar eine höhere Wertung des 94-5V Tests zu erreichen ist (von 5VB auf 5VA bei 1,5 mm)

**Tabelle 2a: Erfindungsgemäß geeignete Aufbaumaterialien, enthaltend Carbonfasern, und Vergleichsbeispiel 44V**

| Die Werte für die Schmelzviskositäten in der folgenden Tabelle sind jeweils angegeben zu den Scherraten in [1/sec]. | | | | | |
|---|---|---|---|---|---|
| **Beispiel** | | **44V** | **45** | **46** | **47** |
| A-3 | [Gew.-%] | 81,00 | 81,00 | 81,00 | 81,00 |
| A-2 | [Gew.-%] | 7,00 | 6,79 | 6,69 | 6,59 |
| C-3 | [Gew.-%] | 12,00 | 12,00 | 12,00 | 12,00 |
| D | [Gew.-%] | - | 0,20 | 0,30 | 0,40 |
| F | [Gew.-%] | - | 0,01 | 0,01 | 0,01 |
| **Ergebnisse** | | | | | |
| MVR | [$cm^3$/10 min] | 7,0 | 8,6 | 11,7 | 20,5 |
| IMVR20' | [$cm^3$/10 min] | 7,6 | 9,9 | 16,9 | 24,1 |
| Schmelzvisk. bei 300°C | | | | | |
| eta 50 | [Pas] | 535 | 492 | 468 | 401 |
| eta 100 | [Pas] | 497 | 466 | 441 | 379 |
| eta 200 | [Pas] | 452 | 423 | 401 | 343 |
| eta 500 | [Pas] | 365 | 346 | 327 | 287 |
| eta 1000 | [Pas] | 292 | 278 | 264 | 233 |
| eta 1500 | [Pas] | 253 | 241 | 226 | 203 |
| eta 5000 | [Pas] | 138 | 130 | 124 | 116 |
| Schmelzvisk. bei 320°C | | | | | |
| eta 50 | [Pas] | 254 | 236 | 240 | 216 |
| eta 100 | [Pas] | 250 | 227 | 235 | 200 |
| eta 200 | [Pas] | 249 | 225 | 221 | 199 |
| eta 500 | [Pas] | 217 | 198 | 192 | 176 |
| eta 1000 | [Pas] | 184 | 167 | 163 | 154 |
| eta 1500 | [Pas] | 162 | 147 | 143 | 134 |
| eta 5000 | [Pas] | 100 | 93 | 91 | 87 |
| Schmelzvisk. bei 340°C | | | | | |
| eta 50 | [Pas] | 149 | 118 | 109 | 101 |
| eta 100 | [Pas] | 146 | 115 | 107 | 99 |
| eta 200 | [Pas] | 139 | 114 | 105 | 96 |
| eta 500 | [Pas] | 126 | 113 | 103 | 88 |
| eta 1000 | [Pas] | 107 | 102 | 99 | 77 |
| eta 1500 | [Pas] | 102 | 93 | 90 | 72 |

(fortgesetzt)

| | | | | | |
|---|---|---|---|---|---|
| Schmelzvisk. bei 340°C | | | | | |
| eta 5000 | [Pas] | 70 | 64 | 64 | 50 |

In Tabelle 2a sind zu erfindungsgemäß geeigneten Aufbaumaterialien 45 bis 47 wichtige Eigenschaften angegeben. Dem ist das Vergleichsbeispiel 44V gegenübergestellt. Aus der Tabelle ist zu erkennen, dass die Zusammensetzungen gemäß dem Vergleichsbeispiel, welches keinen Diglycerolester enthält, deutlich schlechtere Schmelze-Volumenfließraten MVR aufweist. Die Fließkurven der erfindungsgemäß geeigneten Aufbaumaterialien zeigen bei den verschiedenen Messtemperaturen über den gesamten Scherbereich jeweils deutlich reduzierte Schmelzviskositäten, was eine verbesserte Fließfähigkeit bedeutet.

**Tabelle 2b: Erfindungsgemäß geeignete Aufbaumaterialien, enthaltend Carbonfasern, und Vergleichsbeispiele 48V und 52V**

| Die Werte für die Schmelzviskositäten in der folgenden Tabelle sind jeweils angegeben zu den Scherraten in [1/sec]. | | | | | | | | | |
|---|---|---|---|---|---|---|---|---|---|
| **Rezeptur** | | **48V** | **49** | **50** | **51** | **52V** | **53** | **54** | **55** |
| A-3 | [Gew.-%] | 81,00 | 81,00 | 81,00 | 81,00 | 81,00 | 81,00 | 81,00 | 81,00 |
| A-2 | [Gew.-%] | 7,00 | 6,79 | 6,69 | 6,59 | 7,00 | 6,79 | 6,69 | 6,59 |
| C-5 | [Gew.-%] | 12,00 | 12,00 | 12,00 | 12,00 | - | - | - | - |
| C-6 | [Gew.-%] | - | - | - | - | 12,00 | 12,00 | 12,00 | 12,00 |
| D | [Gew.-%] | - | 0,20 | 0,30 | 0,40 | - | 0,20 | 0,30 | 0,40 |
| F | [Gew.-%] | - | 0,01 | 0,01 | 0,01 | - | 0,01 | 0,01 | 0,01 |
| **Prüfungen:** | | | | | | | | | |
| MVR | [$cm^3$/10 min] | 6,8 | 10,6 | 12,6 | 18,3 | 6,3 | 7,9 | 9,1 | 10,4 |
| IMVR20' | [$cm^3$/10 min] | 7,5 | 13,2 | 17,4 | 25,8 | 7,0 | 10,4 | 11,1 | 13,6 |
| Schmelzvisk. bei 300°C | | | | | | | | | |
| eta 50 | [Pas] | 456 | 366 | 349 | 302 | 513 | 456 | 453 | 452 |
| eta 100 | [Pas] | 424 | 350 | 329 | 284 | 512 | 446 | 427 | 423 |
| eta 200 | [Pas] | 388 | 322 | 303 | 270 | 458 | 411 | 391 | 386 |
| eta 500 | [Pas] | 330 | 275 | 263 | 236 | 376 | 339 | 324 | 320 |
| eta 1000 | [Pas] | 269 | 226 | 222 | 197 | 299 | 275 | 263 | 257 |
| eta 1500 | [Pas] | 233 | 197 | 196 | 173 | 257 | 239 | 228 | 223 |
| eta 5000 | [Pas] | 126 | 111 | 111 | 103 | 135 | 126 | 123 | 121 |
| Schmelzvisk. bei 320°C | | | | | | | | | |
| eta 50 | [Pas] | 236 | 164 | 146 | 90 | 350 | 252 | 243 | 225 |
| eta 100 | [Pas] | 217 | 158 | 150 | 88 | 326 | 240 | 229 | 218 |
| eta 200 | [Pas] | 193 | 151 | 141 | 86 | 322 | 241 | 225 | 198 |

(fortgesetzt)

| | | | | | | | | | |
|---|---|---|---|---|---|---|---|---|---|
| Schmelzvisk. bei 320°C | | | | | | | | | |
| eta 500 | [Pas] | 165 | 135 | 134 | 85 | 270 | 211 | 198 | 175 |
| eta 1000 | [Pas] | 145 | 122 | 121 | 78 | 224 | 180 | 171 | 157 |
| eta 1500 | [Pas] | 126 | 110 | 109 | 76 | 192 | 161 | 154 | 135 |
| eta 5000 | [Pas] | 85 | 74 | 74 | 54 | 110 | 97 | 93 | 85 |
| Schmelzvisk. bei 340°C | | | | | | | | | |
| eta 50 | [Pas] | 102 | 56 | 67 | 38 | 163 | 145 | 122 | 134 |
| eta 100 | [Pas] | 101 | 55 | 66 | 37 | 162 | 143 | 117 | 126 |
| eta 200 | [Pas] | 99 | 53 | 61 | 35 | 161 | 138 | 113 | 121 |
| eta 500 | [Pas] | 92 | 52 | 55 | 34 | 136 | 127 | 112 | 110 |
| eta 1000 | [Pas] | 85 | 49 | 50 | 33 | 124 | 115 | 104 | 97 |
| eta 1500 | [Pas] | 81 | 48 | 48 | 32 | 111 | 106 | 95 | 85 |
| eta 5000 | [Pas] | 58 | 38 | 37 | 25 | 75 | 70 | 63 | 62 |

In Tabelle 2b sind zu erfindungsgemäß geeigneten Aufbaumaterialien 49 bis 51 und 53 bis 55 wichtige Eigenschaften angegeben. Dem sind die Vergleichsbeispiels 48V und 52V gegenübergestellt. Aus der Tabelle ist zu erkennen, dass die Zusammensetzungen gemäß den Vergleichsbeispielen, welche keinen Diglycerolester enthalten, deutlich schlechtere Schmelze-Volumenfließraten MVR aufweisen. Die Fließkurven der erfindungsgemäß geeigneten Aufbaumaterialien zeigen bei den verschiedenen Messtemperaturen über den gesamten Scherbereich jeweils deutlich reduzierte Schmelzviskositäten, was eine verbesserte Fließfähigkeit bedeutet.

**Tabelle 3a: Erfindungsgemäß geeignete Aufbaumaterialien, enthaltend Carbon-Nanotubes, und Vergleichsbeispiele 56V bis 63V**

| **Beispiel** | | **56V** | **57V** | **58V** | **59V** | **60V** | **61V** | **62V** | **63V** | **64** | **65** | **66** |
|---|---|---|---|---|---|---|---|---|---|---|---|---|
| A-3 | [Gew.-%] | 90,00 | 90,00 | 90,00 | 90,00 | 90,00 | 90,00 | 90,00 | 90,00 | 90,00 | 90,00 | 90,00 |
| A-2 | [Gew.-%] | 10,00 | 8,00 | 7,80 | 7,60 | 7,40 | 7,80 | 7,60 | 7,40 | 7,80 | 7,60 | 7,40 |
| G-1 | [Gew.-%] | - | - | 0,20 | 0,40 | 0,60 | - | - | - | - | - | - |
| G-2 | [Gew.-%] | - | - | - | - | - | 0,20 | 0,40 | 0,60 | - | - | - |
| D | [Gew.-%] | - | - | - | - | - | - | - | - | 0,20 | 0,40 | 0,60 |
| C-4 | [Gew.-%] | - | 2,00 | 2,00 | 2,00 | 2,00 | 2,00 | 2,00 | 2,00 | 2,00 | 2,00 | 2,00 |
| **Prüfungen:** | | | | | | | | | | | | |
| MVR | [$cm^3$/10 min] | 10,6 | 4,2 | 6,1 | 8,6 | 11,6 | 4,3 | 4,7 | 5,3 | 9,6 | 11,8 | 26,1 |
| IMVR20' | [$cm^3$/10] min] | 10 | 4,1 | 6,4 | 10,1 | 14,3 | 4,3 | 5 | 5,4 | 10,2 | 13,5 | 27,2 |
| Vicat VSTB50 | [°C] | 147,2 | 148,2 | 145 | 142,9 | 140,6 | 146,5 | 145,2 | 143,6 | 145,2 | 142,9 | 139,4 |

In Tabelle 3a sind zu erfindungsgemäß geeigneten Aufbaumaterialien 64 bis 66 wichtige Eigenschaften angegeben. Dem sind die Vergleichsbeispiele 56V bis 63V gegenübergestellt. Aus der Tabelle ist zu erkennen, dass die Zusammensetzungen gemäß den Vergleichsbeispielen, welche keinen Diglycerolester enthalten, deutlich schlechtere Schmelze-Volumenfließraten MVR aufweisen.

**Tabelle 3b: Erfindungsgemäß geeignete Aufbaumaterialien, enthaltend Carbon-Nanotubes, und Vergleichsbeispiele 67V bis 74V**

| **Beispiel** | | **67V** | **68V** | **69V** | **70V** | **71V** | **72V** | **73V** | **74V** | **75** | **76** | **77** |
|---|---|---|---|---|---|---|---|---|---|---|---|---|
| A-3 | [Gew.-%] | 90,00 | 90,00 | 90,00 | 90,00 | 90,00 | 90,00 | 90,00 | 90,00 | 90,00 | 90,00 | 90,00 |
| A-2 | [Gew.-%] | 10,00 | 7,00 | 6,80 | 6,60 | 6,40 | 6,80 | 6,60 | 6,40 | 6,80 | 6,60 | 6,40 |
| G-1 | [Gew.-%] | - | - | 0,20 | 0,40 | 0,60 | - | - | - | - | - | - |
| G-2 | [Gew.-%] | - | - | - | - | - | 0,20 | 0,40 | 0,60 | - | - | - |
| D | [Gew.-%] | - | - | - | - | - | - | - | - | 0,20 | 0,40 | 0,60 |
| C-4 | [Gew.-%] | - | 3,00 | 3,00 | 3,00 | 3,00 | 3,00 | 3,00 | 3,00 | 3,00 | 3,00 | 3,00 |
| **Prüfungen:** | | | | | | | | | | | | |
| MVR | [$cm^3$/10 min] | 10,2 | 2,2 | 3,7 | 5,7 | 8,2 | 2,5 | 2,8 | 3,2 | 4,9 | 15,7 | 17,7 |
| IMVR20’ | [$cm^3$/10 min] | 10,2 | 2,3 | 4,0 | 6,9 | 10,1 | 2,7 | 2,9 | 3,1 | 5,4 | 14,2 | 19,3 |
| **Delta MVR/IMVR20’** | | **0,0** | **0,1** | **0,3** | **1,2** | **1,9** | **0,2** | **0,1** | **-0,1** | **0,5** | **-1,5** | **1,6** |
| Vicat VSTB50 | [°C] | 147,5 | 148,8 | 145,9 | 143,3 | 140,5 | 146,9 | 145,6 | 143,5 | 145,2 | 142,7 | 139,6 |

In Tabelle 3b sind zu erfindungsgemäß geeigneten Aufbaumaterialien 75 bis 77 wichtige Eigenschaften angegeben. Dem sind die Vergleichsbeispiele 67V bis 74V gegenübergestellt. Aus der Tabelle ist zu erkennen, dass die Zusammensetzungen gemäß den Vergleichsbeispielen, welche keinen Diglycerolester enthalten, deutlich schlechtere Schmelze-Volumenfließraten MVR aufweisen.

**Tabelle 3c: Erfindungsgemäß geeignete Aufbaumaterialien, enthaltend Carbon-Nanotubes und Vergleichsbeispiele 78V bis 83V**

| **Beispiel** | | **78V** | **79V** | **80V** | **81V** | **82V** | **83V** | **84** |
|---|---|---|---|---|---|---|---|---|
| A-3 | [Gew.-%] | 90,00 | 90,00 | 90,00 | 90,00 | 90,00 | 90,00 | 90,00 |
| A-2 | [Gew.-%] | 10,00 | 6,00 | 5,40 | 5,80 | 5,60 | 5,40 | 5,40 |
| G-1 | [Gew.-%] | - | - | 0,60 | - | - | - | - |
| G-2 | [Gew.-%] | - | - | - | 0,20 | 0,40 | 0,60 | - |
| D | [Gew.-%] | - | - | - | - | - | - | 0,60 |
| C-4 | [Gew.-%] | - | 4,00 | 4,00 | 4,00 | 4,00 | 4,00 | 4,00 |
| **Prüfungen:** | | | | | | | | |
| MVR | [$cm^3$/10 min] | 10,1 | 0,9 | 4,5 | 0,7 | 1,6 | 1,7 | 11,7 |
| IMVR20’ | [$cm^3$/10 min] | 10,0 | 0,9 | 5,3 | 0,8 | 1,7 | 1,7 | 11,6 |
| Vicat VSTB50 | [°C] | 146,8 | 148,3 | 140,3 | 147,1 | 145,3 | 144 | 140,5 |

In Tabelle 3c sind zu der erfindungsgemäß geeigneten Aufbaumaterialien 84 wichtige Eigenschaften angegeben. Dem sind die Vergleichsbeispiele 78V bis 83V, insbesondere 80V und 83V, gegenübergestellt. Aus der Tabelle ist zu erkennen, dass die Zusammensetzungen gemäß den Vergleichsbeispielen, welche keinen Diglycerolester enthalten, deutlich schlechtere Schmelze-Volumenfließraten MVR aufweisen.

Für den Test der Fließfähigkeit von Aufbaumaterial mit und ohne Fließhilfsmittel im FDM Druck wurden aus folgenden Komponenten Stränge mit einem Durchmesser von 1,75 mm extrudiert. Dabei stellt das Aufbaumaterial V85 ein Vergleichsmaterial dar, während die Aufbaumaterialien 86 und 87 erfindungsgemäß sind.

**Tabelle 4a: Erfindungsgemäß geeignete Aufbaumaterialien, enthaltend Fließhilfsmittel D**

| **Beispiel** | | **V85** | **86** | **87** |
|---|---|---|---|---|
| A-1 | [Gew.-%] | 100 | 99,8 | 99,6 |
| D | [Gew.-%] | - | 0,2 | 0,4 |

Die Filamente wurden mit einem Doppelschneckenextruder der Fa. Fisher Scientific hergestellt. Das Gerät besteht aus einer Antriebseinheit Rheodrive7 und einer Compoundiereinheit Rheomex PTW 16/40 mit Doppelschnecke und einer Düse mit einem Durchmesser von 3 mm. Die Materialien wurden als getrocknetes Granulat mit 700 g/h in den Extruder gegeben und mit einem Temperaturprofil von 250, 270, 280, 290, 300, 300, 300, 260, 250 °C aufgeschmolzen und aus der Düse gefördert. Die Schneckendrehzahl wurde mit 50 U/min eingestellt. Der aus der Düse austretende Strang wird auf einen Durchmesser von 1,75 mm nachverstreckt, über ein Wasserbad abgekühlt und als Filament aufgewickelt.

Es wurde ein FDM-Drucker des Typs X400 CE der Firma RepRap mit einer Kombination aus E3D Titan-Extruder und Hotend 1730-FMH der Fa. Achatz Industries mit den folgenden Verfahrensbedingungen eingesetzt: Bauraumtemperatur = 23 °C, Extrusionsdüsen-Durchmesser = 0,4 mm. Die Filamente wurden jeweils 2,5 min lang bei unterschiedlicher Düsentemperatur und unterschiedlichem Volumenstrom (berechnet aus eingestellter Ablagegeschwindigkeit und Querschnittsfläche des Düsenauslasses) in den Drucker gefördert und extrudiert. Das extrudierte Material wurde in einem Behälter eingesammelt, gewogen (Ist-Gewicht). Anhand der eingestellten Ablagegeschwindigkeit und der Extrusionszeit kann die maximal extrudierte Menge des Materials errechnet werden (Soll-Gewicht). Das Ist-Gewicht wurde mit dem Soll-Gewicht verglichen und als Extrusionsrate in % angegeben. Die Testbedingungen und die Ergebnisse sind in der

Tabelle 4b zusammengefasst. Die Düsentemperatur wurde im Bereich von 240 °C - 260 °C in Intervallen von 10 °C variiert.

**Tabelle 4b: Extrusionsrate für Aubaumaterialien V85, 86 und 87 bei unterschiedlichen Temperaturen und unterschiedlichen Volumenströmen**

| Beispiel | | V85 | 86 | 87 |
|---|---|---|---|---|
| Düsentemperatur | Volumenstrom [$mm^3/s$] | Extrusionsrate [%] | Extrusionsrate [%] | Extrusionsrate [%] |
| 240 °C | 3,6 | 60,9 | 89,5 | 90,0 |
| | 4,8 | 43,6 | 84,9 | 86,6 |
| | 5,4 | 35,9 | 86,5 | 89,7 |
| | 6,0 | 20,2 | 82,2 | 87,5 |
| 250 °C | 3,6 | 75,7 | 88,2 | 90,9 |
| | 4,8 | 59,9 | 89,0 | 87,7 |
| | 5,4 | 51,1 | 86,3 | 87,9 |
| | 6,0 | 37,0 | 85,9 | 88,9 |
| 260 °C | 4,8 | 75,1 | 90,4 | 88,1 |
| | 5,4 | 63,5 | 87,8 | 89,4 |
| | 6,0 | 58,7 | 88,2 | 88,5 |

Es ist zu erkennen, dass in dem getesteten Temperaturbereich das Aufbaumaterial V85 die niedrigste Extrusionsrate erreicht hat. Mit steigendem, voreingestellten Volumenstrom ist die Extrusionsrate stark gesunken, wie z.B. bei 240 °C von 60,87% auf 20,16% bei Steigerung des Volumenstroms von 3,6 auf 6,0 $mm^3/s$. Die erfindungsgemäßen Aufbaumaterialien 86 und 87 zeigten generell höhere Extrusionsraten. Darüber hinaus blieben die Extrusionsraten sehr stabil bei steigendem Volumenstrom. Insgesamt ist zu erkennen, dass die Zugabe von Fließhilfsmittel eine höhere Extrusionsrate in FDM Drucker sowie eine konstantere Extrusionsrate bei hohen voreingestellten Volumenströmen gewährleistet.

Die verbesserte Fließfähigkeit der erfindungsgemäßen Aufbaumaterialien korreliert in überraschender Weise mit einer höheren voreingestellten Extrusionsgeschwindigkeit bzw. sich daraus ergebenden Volumenströmen im FDM Verfahren bei einer gegebenen Temperatur und einem gegebenen Förderdruck. Es werden so höhere Bauraten in Kombination mit vergleichbaren oder besseren Produkteigenschaften erhalten. Auf diese Weise können erfindungsgemäße Formulierungen bei niedrigeren Temperaturen und gleichen Bauraten verarbeitet werden, was bei einer gleichzeitigen Verarbeitung von temperaturempfindlichen Materialien ein großer Vorteil sein kann.

## Patentansprüche

**1.** Verfahren zur Herstellung eines Gegenstands mittels eines additiven Fertigungsverfahrens, umfassend die Schritte:

- Auftragen eines Filaments eines zumindest teilweise geschmolzenen Aufbaumaterials auf einen Träger, so dass eine Lage des Aufbaumaterials erhalten wird, welche einem ersten ausgewählten Querschnitt des Gegenstands entspricht;
- Auftragen eines Filaments des zumindest teilweise geschmolzenen Aufbaumaterials auf eine zuvor aufgetragene Lage des Aufbaumaterials, so dass eine weitere Lage des Aufbaumaterials erhalten wird, welche einem weiteren ausgewählten Querschnitt des Gegenstands entspricht und welche mit der zuvor aufgetragenen Lage verbunden ist;
- Wiederholen des Schritts des Auftragens eines Filaments des zumindest teilweise geschmolzenen Aufbaumaterials auf eine zuvor aufgetragene Lage des Aufbaumaterials, bis der Gegenstand gebildet ist;

**dadurch gekennzeichnet, dass**
das Aufbaumaterial umfasst:

A) 20 Gew.-% bis 99,0 Gew.-% aromatisches Polycarbonat,

B) 0,0 bis 1,0 Gew.-% mindestens eines Flammschutzmittels,
C) 0,0 Gew.-% bis 50,0 Gew.-% einer Komponente ausgewählt aus: Glasfasern, Carbonfasern, Carbon-Nanotubes, Graphit, Schlagzähmodifikatoren oder Mischungen aus mindestens zwei hiervon,
D) 0,01 Gew.-% bis 3,0 Gew.-% mindestens eines Fließhilfsmittels, ausgewählt aus der Gruppe der Diglycerolester,
E) 0,0 Gew.-% bis 5,0 Gew.-% mindestens eines Antitropfmittels,
F) 0,0 Gew.-% bis 1,0 Gew.-% mindestens eines Thermostabilisators,
G) 0,0 Gew.-% bis 10,0 Gew.-% weitere Additive,

wobei sich im Aufbaumaterial die Komponenten A) bis G) zu$\leq$100 Gew.-% ergänzen.

2. Verfahren nach Anspruch 1, **dadurch gekennzeichnet, dass** im Aufbaumaterial als Diglycerolester ein Ester der Formel (I)

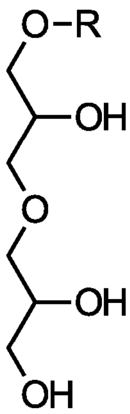
(I)

mit R = $COC_nH_{2n+1}$ und/oder R = COR',
wobei n eine ganze Zahl ist und wobei R' ein verzweigter Alkylrest oder ein verzweigter oder unverzweigter Alkenylrest ist und $C_nH_{2n+1}$ ein aliphatischer, gesättigter linearer Alkylrest ist, enthalten ist.

3. Verfahren nach Anspruch 2, **dadurch gekennzeichnet, dass** R = $COC_nH_{2n+1}$ ist, wobei n eine ganze Zahl von 6-24 ist.

4. Verfahren nach Anspruch 2 oder 3, **dadurch gekennzeichnet, dass** im Aufbaumaterial Diglycerolmonolaurylester enthalten ist.

5. Verfahren nach einem der vorhergehenden Ansprüche, **dadurch gekennzeichnet, dass** im Aufbaumaterial als Flammschutzmittel ein Alkali- und/oder Erdalkalisalz einer aliphatischen oder aromatischen Sulfonsäure oder eines Sulfonamids enthalten ist.

6. Verfahren nach einem der vorhergehenden Ansprüche, **dadurch gekennzeichnet, dass** im Aufbaumaterial mindestens 0,05 Gew.-% eines Antitropfmittels enthalten sind.

7. Verfahren nach einem der vorhergehenden Ansprüche, **dadurch gekennzeichnet, dass** im Aufbaumaterial als Komponente C Glasfasern enthalten sind und das Aufbaumaterial weiterhin eine oder mehrere der folgenden Eigenschaften aufweist:

- das Aufbaumaterial enthält 0,001 bis 1,0 Gew.-% eines Flammschutzmittels
- die Glasfasern sind Schnittglasfasern
- im Aufbaumaterial sind Glasfasern eincompoundiert und die Glasfasern weisen eine Länge vor der Compoundierung von 0,5 mm bis 10 mm auf
- die Glasfasern weisen einen mittleren Faserdurchmesser von 5 bis 25 $\mu$m auf.

8. Verfahren nach einem der vorhergehenden Ansprüche, **dadurch gekennzeichnet, dass** als Graphit wenigstens teilweise expandierter Graphit eingesetzt wird.

**9.** Verfahren nach einem der vorhergehenden Ansprüche, **dadurch gekennzeichnet, dass** der Schlagzähmodifikator ein oder mehrere Pfropfpolymerisat(e) von

C.1 5 bis 95 Gew.-%, wenigstens eines Vinylmonomeren auf
C.2 95 bis 5 Gew.-% wenigstens einer Pfropfgrundlage, ausgewählt aus Dienkautschuken, EP(D)M-Kautschuken, Acrylat-, Polyurethan-, Silikon-, Silikonacrylat-, Chloropren, Ethylen/Vinylacetat-Kautschuken oder Mischungen aus mindestens zwei hiervon
umfasst.

**10.** Verfahren nach einem der vorhergehenden Ansprüche, **dadurch gekennzeichnet, dass** das Aufbaumaterial eine Schmelze-Volumenfließrate MVR von 2 bis 85 $cm^3/10$ min, bestimmt nach ISO 1133 (Prüftemperatur 300°C, Masse 1,2 kg), aufweist und der E-Modul, bestimmt nach ISO 527, mindestens 2100 $kg*m^{-1}*s^{-2}$ beträgt.

**11.** Verfahren nach einem der vorhergehenden Ansprüche, **dadurch gekennzeichnet, dass** das Aufbaumaterial Carbonfasern enthält.

**12.** Verfahren nach einem der vorhergehenden Ansprüche, **dadurch gekennzeichnet, dass** das Verfahren innerhalb eines Bauraums durchgeführt wird und die Temperatur des Bauraums ≥ 10 °C geringer ist als die Glasübergangstemperatur $T_g$ des Aufbaumaterials (bestimmt durch DSC gemäß DIN EN ISO 11357 bei einer Heizrate von 10 °C/min).

**13.** Verwendung eines Aufbaumaterials in einem additiven Schmelzschichtungsverfahren,
**dadurch gekennzeichnet, dass**
das Aufbaumaterial umfasst:

A) 20 Gew.-% bis 99,0 Gew.-% aromatisches Polycarbonat,
B) 0,0 bis 1,0 Gew.-% mindestens eines Flammschutzmittels,
C) 0,0 Gew.-% bis 50,0 Gew.-% einer Komponente ausgewählt aus: Glasfasern, Carbonfasern, Carbon-Nanotubes, Graphit, Schlagzähmodifikatoren oder Mischungen aus mindestens zwei hiervon,
D) 0,01 Gew.-% bis 3,0 Gew.-% mindestens eines Fließhilfsmittels, ausgewählt aus der Gruppe der Diglycerolester,
E) 0,0 Gew.-% bis 5,0 Gew.-% mindestens eines Antitropfmittels,
F) 0,0 Gew.-% bis 1,0 Gew.-% mindestens eines Thermostabilisators,
G) 0,0 Gew.-% bis 10,0 Gew.-% weitere Additive.

**14.** Verwendung gemäß Anspruch 13, **dadurch gekennzeichnet, dass** im Aufbaumaterial als Diglycerolester ein Ester der Formel (I)

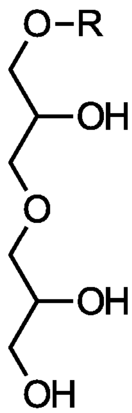
(I)

mit R = $COC_nH_{2n+1}$ und/oder R = COR',
wobei n eine ganze Zahl ist und wobei R' ein verzweigter Alkylrest oder ein verzweigter oder unverzweigter Alkenylrest ist und $C_nH_{2n+1}$ ein aliphatischer, gesättigter linearer Alkylrest ist, enthalten ist.

**15.** Verwendung gemäß Anspruch 13 oder 14, **dadurch gekennzeichnet, dass** im Aufbaumaterial als Diglycerolester

Diglycerolmonolaurylester enthalten ist.

## Claims

1. Process for producing an article by means of an additive manufacturing method, comprising the steps of:

   - applying a filament of an at least partially molten construction material to a carrier, such that a layer of the construction material is obtained, corresponding to a first selected cross section of the article;
   - applying a filament of the at least partially molten construction material onto a previously applied layer of the construction material to obtain a further layer of the construction material which corresponds to a further selected cross section of the article and which is joined to the previously applied layer;
   - repeating the step of applying a filament of the at least partially molten construction material onto a previously applied layer of the construction material until the article has been formed;

   **characterized in that**
   the construction material comprises:

   A) 20% by weight to 99.0% by weight of aromatic polycarbonate,
   B) 0.0% to 1.0% by weight of at least one flame retardant,
   C) 0.0% by weight to 50.0% by weight of a component selected from: glass fibers, carbon fibers, carbon nanotubes, graphite, impact modifiers or mixtures of at least two of these,
   D) 0.01% by weight to 3.0% by weight of at least one flow auxiliary selected from the group of the diglycerol esters,
   E) 0.0% by weight to 5.0% by weight of at least one anti-dripping agent,
   F) 0.0% by weight to 1.0% by weight of at least one thermal stabilizer,
   G) 0.0% by weight to 10.0% by weight of further additives,

   wherein components A) to G) add up to ≤ 100% by weight in the construction material.

2. Process according to Claim 1, **characterized in that** the diglycerol ester present in the construction material is an ester of the formula (I)

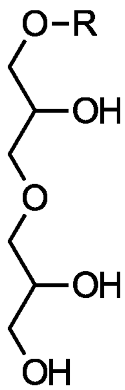

(I)

   with R = $COC_nH_{2n+1}$ and/or R = COR',
   where n is an integer and where R' is a branched alkyl radical or a branched or unbranched alkenyl radical and $C_nH_{2n+1}$ is an aliphatic, saturated linear alkyl radical.

3. Process according to Claim 2, **characterized in that** R = $COC_nH_{2n+1}$ where n is an integer of 6-24.

4. Process according to Claim 2 or 3, **characterized in that** diglycerol monolauryl ester is present in the construction material.

5. Process according to any of the preceding claims, **characterized in that** the flame retardant present in the construction material is an alkali metal and/or alkaline earth metal salt of an aliphatic or aromatic sulfonic acid or of a sulfonamide.

6. Process according to any of the preceding claims, **characterized in that** at least 0.05% by weight of an anti-dripping agent is present in the construction material.

7. Process according to any of the preceding claims, **characterized in that** glass fibers are present in the construction material as component C and the construction material also has one or more of the following properties:

- the construction material contains 0.001% to 1.0% by weight of a flame retardant
- the glass fibers are chopped glass fibers
- glass fibers have been incorporated in the construction material by compounding and the glass fibers have a length prior to the compounding of 0.5 mm to 10 mm
- the glass fibers have an average fiber diameter of 5 to 25 μm.

8. Process according to any of the preceding claims, **characterized in that** the graphite used is at least partly expanded graphite.

9. Process according to any of the preceding claims, **characterized in that** the impact modifier comprises one or more graft polymer(s) of

C.1 5% to 95% by weight of at least one vinyl monomer onto
C.295% to 5% by weight of at least one graft base selected from diene rubbers, EP(D)M rubbers, acrylate rubbers, polyurethane rubbers, silicone rubbers, silicone acrylate rubbers, chloroprene rubbers, ethylene/vinyl acetate rubbers or mixtures of at least two of these.

10. Process according to any of the preceding claims, **characterized in that** the construction material has a melt volume flow rate MVR of 2 to 85 $cm^3$/10 min, determined to ISO 1133 (testing temperature 300°C, mass 1.2 kg), and the modulus of elasticity, determined to ISO 527, is at least 2100 $kg{*}m^{-1}{*}s^{-2}$.

11. Process according to any of the preceding claims, **characterized in that** the construction material comprises carbon fibers.

12. Process according to any of the preceding claims, **characterized in that** the process is conducted within a construction space and the temperature of the construction space is ≥ 10°C lower than the glass transition temperature $T_g$ of the construction material (determined by DSC to DIN EN ISO 11357 at a heating rate of 10°C/min).

13. Use of a construction material in an additive melt layering method,
**characterized in that**
the construction material comprises:

A) 20% by weight to 99.0% by weight of aromatic polycarbonate,
B) 0.0% to 1.0% by weight of at least one flame retardant,
C) 0.0% by weight to 50.0% by weight of a component selected from: glass fibers, carbon fibers, carbon nanotubes, graphite, impact modifiers or mixtures of at least two of these,
D) 0.01% by weight to 3.0% by weight of at least one flow auxiliary selected from the group of the diglycerol esters,
E) 0.0% by weight to 5.0% by weight of at least one anti-dripping agent,
F) 0.0% by weight to 1.0% by weight of at least one thermal stabilizer,
G) 0.0% by weight to 10.0% by weight of further additives.

14. Use according to Claim 13, **characterized in that** the diglycerol ester present in the construction material is an ester of the formula (I)

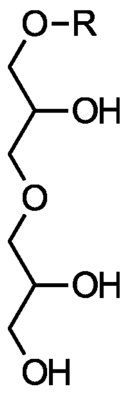

(I)

with R = $COC_nH_{2n+1}$ and/or R = COR',
where n is an integer and where R' is a branched alkyl radical or a branched or unbranched alkenyl radical and $C_nH_{2n+1}$ is an aliphatic, saturated linear alkyl radical.

**15.** Use according to Claim 13 or 14, **characterized in that** diglycerol monolauryl ester is present in the construction material as diglycerol ester.

## Revendications

**1.** Procédé de fabrication d'un objet au moyen d'un procédé de production additif, comprenant les étapes suivantes :

- l'application d'un filament d'un matériau de construction au moins partiellement fondu sur un support, de telle sorte qu'une couche du matériau de construction soit obtenue, qui correspond à une première section transversale choisie de l'objet ;
- l'application d'un filament du matériau de construction au moins partiellement fondu sur une couche appliquée auparavant du matériau de construction, de telle sorte qu'une couche supplémentaire du matériau de construction soit obtenue, qui correspond à une section transversale choisie supplémentaire de l'objet et qui est reliée avec la couche appliquée auparavant ;
- la répétition de l'étape d'application d'un filament du matériau de construction au moins partiellement fondu sur une couche appliquée auparavant du matériau de construction, jusqu'à ce que l'objet soit formé ;

**caractérisé en ce que**
le matériau de construction comprend :

A) 20 % en poids à 99,0 % en poids de polycarbonate aromatique,
B) 0,0 à 1,0 % en poids d'au moins un agent ignifuge,
C) 0,0 % en poids à 50,0 % en poids d'un composant choisi parmi : les fibres de verre, les fibres de carbone, les nanotubes de carbone, le graphite, les modificateurs de la résistance aux impacts ou les mélanges d'au moins deux d'entre eux,
D) 0,01 % en poids à 3,0 % en poids d'au moins un adjuvant d'écoulement, choisi dans le groupe des esters de diglycérol,
E) 0,0 % en poids à 5,0 % en poids d'au moins un agent anti-égouttement,
F) 0,0 % en poids à 1,0 % en poids d'au moins un thermostabilisateur,
G) 0,0 % en poids à 10,0 % en poids d'additifs supplémentaires,

la somme des composants A) à G) dans le matériau de construction étant ≤ 100 % en poids.

**2.** Procédé selon la revendication 1, **caractérisé en ce qu'**un ester de la formule (I) est contenu dans le matériau de construction en tant qu'ester de diglycérol

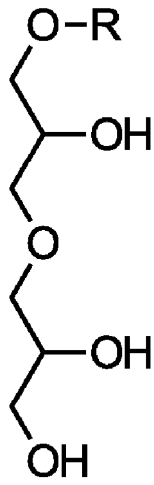

(I)

avec R = $COC_nH_{2n+1}$ et/ou R = COR',
où n est un nombre entier et où R' est un radical alkyle ramifié ou un radical alcényle ramifié ou non ramifié et $C_nH_{2n+1}$ est un radical alkyle linéaire, saturé, aliphatique.

**3.** Procédé selon la revendication 2, **caractérisé en ce que** R = $COC_nH_{2n+1}$, où n est un nombre entier de 6 à 24.

**4.** Procédé selon la revendication 2 ou 3, **caractérisé en ce que** de l'ester monolaurylique de diglcyérol est contenu dans le matériau de construction.

**5.** Procédé selon l'une quelconque des revendications précédentes, **caractérisé en ce qu'**un sel alcalin et/ou alcalino-terreux d'un acide sulfonique aliphatique ou aromatique ou d'un sulfonamide est contenu dans le matériau de construction en tant qu'agent ignifuge.

**6.** Procédé selon l'une quelconque des revendications précédentes, **caractérisé en ce qu'**au moins 0,05 % en poids d'un agent anti-égouttement est contenu dans le matériau de construction.

**7.** Procédé selon l'une quelconque des revendications précédentes, **caractérisé en ce que** des fibres de verre sont contenues dans le matériau de construction en tant que composant C et le matériau de construction présente en outre une ou plusieurs des propriétés suivantes :

- le matériau de construction contient 0,001 à 1,0 % en poids d'un agent ignifuge,
- les fibres de verre sont des fibres de verre coupées,
- les fibres de verre sont incorporées dans le matériau de construction et les fibres de verre présentent une longueur avant l'incorporation de 0,5 mm à 10 mm,
- les fibres de verre présentent un diamètre de fibre moyen de 5 à 25 $\mu$m.

**8.** Procédé selon l'une quelconque des revendications précédentes, **caractérisé en ce que** du graphite au moins partiellement expansé est utilisé en tant que graphite.

**9.** Procédé selon l'une quelconque des revendications précédentes, **caractérisé en ce que** le modificateur de la résistance aux impacts comprend un ou plusieurs polymères greffés de :

C.1 5 à 95 % en poids d'au moins un monomère de vinyle sur
C.2 95 à 5 % en poids d'au moins une base de greffage, choisie parmi les caoutchoucs diéniques, les caoutchoucs d'EP(D)M, les caoutchoucs d'acrylate, de polyuréthane, de silicone, d'acrylate de silicone, de chloroprène, d'éthylène/acétate de vinyle ou des mélanges d'au moinx deux d'entre eux.

**10.** Procédé selon l'une quelconque des revendications précédentes, **caractérisé en ce que** le matériau de construction présente un taux d'écoulement volumique à l'état fondu MVR de 2 à 85 $cm^3$/10 minutes, déterminé selon ISO 1133 (température d'essai 300 °C, masse 1,2 kg), et le module E, déterminé selon ISO 527, est d'au moins 2 100 $kg*m^{-1}*s^{-2}$.

**11.** Procédé selon l'une quelconque des revendications précédentes, **caractérisé en ce que** le matériau de construction contient des fibres de carbone.

**12.** Procédé selon l'une quelconque des revendications précédentes, **caractérisé en ce que** le procédé est réalisé dans une chambre de construction et la température de la chambre de construction est inférieure de ≥ 10 °C à la température de transition vitreuse $T_g$ du matériau de construction (déterminée par DSC selon DIN EN ISO 11357 à un taux de chauffage de 10 °C/minute).

**13.** Utilisation d'un matériau de construction dans un procédé de stratification de masse fondue additif, **caractérisée en ce que** le matériau de construction comprend :

A) 20 % en poids à 99,0 % en poids de polycarbonate aromatique,
B) 0,0 à 1,0 % en poids d'au moins un agent ignifuge,
C) 0,0 % en poids à 50,0 % en poids d'un composant choisi parmi : les fibres de verre, les fibres de carbone, les nanotubes de carbone, le graphite, les modificateurs de la résistance aux impacts ou les mélanges d'au moins deux d'entre eux,
D) 0,01 % en poids à 3,0 % en poids d'au moins un adjuvant d'écoulement, choisi dans le groupe des esters de diglycérol,
E) 0,0 % en poids à 5,0 % en poids d'au moins un agent anti-égouttement,
F) 0,0 % en poids à 1,0 % en poids d'au moins un thermostabilisateur,
G) 0,0 % en poids à 10,0 % en poids d'additifs supplémentaires.

**14.** Utilisation selon la revendication 13, **caractérisée en ce qu'**un ester de la formule (I) est contenu dans le matériau de construction en tant qu'ester de diglycérol

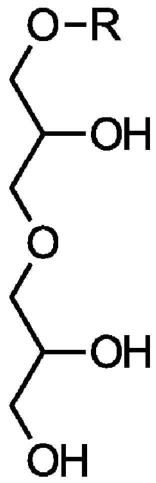

(I)

avec R = $COC_nH_{2n+1}$ et/ou R = COR',
où n est un nombre entier et où R' est un radical alkyle ramifié ou un radical alcényle ramifié ou non ramifié et $C_nH_{2n+1}$ est un radical alkyle linéaire, saturé, aliphatique.

**15.** Utilisation selon la revendication 13 ou 14, **caractérisée en ce que** de l'ester monolaurylique de diglcyérol est contenu dans le matériau de construction en tant qu'ester de diglycérol.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2015077053 A1
- WO 2015195527 A1
- WO 2015193818 A1
- WO 2016087296 A1
- WO 2017005735 A1
- WO 2017005739 A1
- US 3028635 A
- US 2999825 A
- US 3148172 A
- US 2991273 A
- US 3271367 A
- US 4982014 A
- US 2999846 A
- DE 1570703 A
- DE 2063050 A
- DE 2036052 A
- DE 2211956 A
- DE 3832396 A
- FR 1561518 A
- JP 61062039 A
- JP 61062040 A
- JP 61105550 A
- US 1137373 A
- US 1191383 A
- US 3404061 A
- US 2891920 A
- US 3294725 A
- DE 3704657 A1
- DE 3704655 A1
- DE 3631540 A1
- DE 3631539 A1
- US 5807914 A
- EP 430134 A2
- US 4888388 A
- EP 0839623 A
- WO 9615102 A
- EP 0500496 A


### In der Beschreibung aufgeführte Nicht-Patentliteratur


- Chemistry and Physics of Polycarbonates. **SCHNELL.** Polymer Reviews. Interscience Publishers, 1964, vol. 9
- Polycarbonates. **D. FREITAG ; U. GRIGO ; P.R. MÜLLER ; H. NOUVERTNÉ.** Encyclopedia of Polymer Science and Engineering. 1988, vol. 11, 648-718
- Polycarbonate. **U. GRIGO ; K. KIRCHNER ; P.R. MÜLLER.** Kunststoff-Handbuch, Band 3/1, Polycarbonate, Polyacetale, Polyester, Celluloseester. Carl Hanser Verlag, 1992, vol. 3/1, 117-299
- **H. SCHNELL.** Chemistry and Physics of Polycarbonates. Interscience Publishers, 1964
- *CHEMICAL ABSTRACTS,* 29420-49-3
- Ullmann's Encyclopedia of Industrial Chemistry. VCH- Verlag, 1992, vol. A21, 635, , 656
- **M. HOFFMANN ; H. KRÖMER ; R. KUHN.** Polymeranalytik I und II. Georg Thieme- Verlag, 1977
- **W. SCHOLTAN ; H. LANGE.** *Kolloid, Z. und Z. Polymere,* 1972, vol. 250, 782-796
- *CHEMICAL ABSTRACTS,* 9002-84-0
- *CHEMICAL ABSTRACTS,* 25852-37-3
- **HANS ZWEIFEL.** Plastics Additives Handbook. Hanser Verlag, 2000
- *CHEMICAL ABSTRACTS,* 23949-66-8